# EUROPEAN PATENT SPECIFICATION

(11) **EP 3 026 960 B1**
(45) Date of publication and mention of the grant of the patent: **07.11.2018**
(21) Application number: 14290360.8
(22) Date of filing: 28.11.2014
(51) Int. Cl.: H04W 36/00, H04W 92/20

(54) **Method for providing a handover in a mobile communication network**
Verfahren zur Bereitstellung einer Weiterleitung in einem Mobilkommunikationsnetzwerk
Procédé permettant un transfert intercellulaire dans un réseau de communication mobile

(43) Date of publication of application: 01.06.2016
(73) Proprietor: Alcatel Lucent, 91620 Nozay (FR)
(72) Inventor: Hajo, Bakker, 70435 Stuttgart (DE); Uwe, Dötsch, 70435 Stuttgart (DE)
(74) Representative: Nokia EPO representatives

(56) References cited:
- EP-A1- 2 584 817
- US-A1- 2012 142 354
- CATT: "Handover for Carrier Aggregation", 3GPP DRAFT; R2-093722, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090623, 23 June 2009 (2009-06-23), XP050351955, [retrieved on 2009-06-23]

## Description

### Field of the invention

The invention is situated in the field of mobile communication and concerns a method for providing a handover of a mobile user entity from a first radio node towards a second radio node or towards a third radio node in a mobile communication network.

### Background

The LTE (LTE = Long Term Evolution) handover, i.e. a mobile user entity (also termed mobile user terminal) moves from a first ("source") radio cell to a second ("target") radio cell, requires that the access towards the target radio cell is carried out by a RACH (RACH = Random Access Channel) procedure, as defined in 3GPP TS 36.331. According to the standard, after receiving the handover message, the mobile user entity attempts to access the target radio cell at the first available RACH occasion according to the Random Access resource selection defined in 3GPP TS 36.321 [6], i.e. the handover is asynchronous, this means the radio nodes are not timely synchronized so that the mobile user entity must send in particular a timing advance message for the handover.

CATT: "Handover for Carrier Aggregation", 3GPP Draft, R2-093722, 23 June 2009, XP050351955 describes solutions of a handover for carrier aggregation, more particular for the UE to decide through which carrier UE could access the target cell and which carriers UE could use for continuing carrier aggregation (CA) in the target cell. In a first solution, in handover preparation procedure, source eNB provides only one carrier to target eNB for UE accessing. In handover command, target eNB also provides only one carrier through which UE could access the target cell. After UE establishes RRC connection with target cell, CA transmission should be re-activated by dedicated RRC signalling. In a second solution, in handover preparation procedure, source eNB provides a set of recommended component carriers to target eNB, and target eNB chooses the whole or a subset of the recommended carriers for UE to continue CA transmission in the target cell. In handover command, besides providing the carrier that UE could access target cell, target eNB also informs UE of component carriers which should be activated for CA transmission after RRC connection establishment in the target cell. Conclusively, the mobile user entity accesses the target eNB via Random Access Procedure and exchanges RRC connection messages with source eNB and target eNB.

Accessing the target radio cell using the Random Access Channel delays the handover execution, as several messages between the mobile user entity and the radio nodes must be exchanged. In addition, the handover might fail, if the Random Access Channel does not offer sufficient resources.

### Summary

The invention has the objective to improve the handover in a mobile communication network. The invention is set out in the appended set of claims. The embodiments and/or examples of the following description which are not covered by the appended claims are considered as not being part of the present invention.

This objective is achieved by a method for providing a handover in a mobile communication network as defined in claim 1. The method comprises sending, by a first radio node of the mobile communication network, the first radio node operating a first radio cell, a handover request concerning a mobile user entity, UE, which is served by the first radio node, to a second radio node of the mobile communication network, the second radio node operating a second radio cell,
wherein the handover request contains a user specific control channel search space definition or an indirect reference to a user specific control channel search space definition.

The objective is further achieved by a first radio node for operating a first radio cell of a mobile communication network as defined in claim 12. The first radio node comprises a control unit adapted to send a handover request concerning a mobile user entity, UE, served by the first radio node to a second radio node operating a second radio cell of the mobile communication network, wherein the handover request contains a user specific control channel search space definition or an indirect reference to a user specific control channel search space definition.

The objective is further achieved by a second radio node for operating a second radio cell of a mobile communication network as defined in claim 13. The second radio node comprises a control unit adapted to receive from a first radio node operating a first radio cell of the mobile communication network a handover request concerning a mobile user entity, UE, served by the first radio node, wherein the handover request contains a user specific control channel search space definition or an indirect reference to a user specific control channel search space definition.

The objective is further achieved by a software product, adapted to execute the method for providing a handover in a mobile communication network, when executed on a computer, as defined in claim 14.

Further features and advantages are described. Preferably, these are not meant to be exclusive, but to be combinable.

The mobile communication network comprises a first radio node operating a first radio cell and a second radio node operating a second radio cell. Preferably, the mobile communication network comprises further a third and/or further radio nodes operating a third and/or further radio cells, respectively. According to the implementation, the third and/or further radio nodes implement steps described as implemented by the second radio node.

Preferably, the first radio node is termed "source radio node", and the second radio node is termed "target radio node". Further, preferably, the third radio node is termed "other radio node". Accordingly, preferably, the first radio cell is termed "source radio cell", the second radio cell is termed "target radio cell". Preferably, the third radio cell is termed "other radio cell". Preferably, the third radio node is technically equivalent to the second radio node in that the third radio node has the same elements as the second radio node such as a control unit, antenna, receiver etc. Preferably, same applies for the first radio node and, in case the mobile communication network comprises one or more further radio nodes, for the further radio nodes.

Preferably, the computer used to execute one or more, or all, steps is implemented by the control units of the first, second and/or third and/or further radio nodes. Thus, the computer might be implemented as a distributed application computer, in case the control units of the radio nodes implement the computer. Alternatively or in combination, the computer is implemented as a centralized computer.

Preferably, the invention is implemented by the use of software, hardware or combination of software and hardware.

Preferably, the mobile user entity is termed with the abbreviation "UE". Although the feature "mobile" is not part of the abbreviation, nevertheless the abbreviation "UE" refers to a mobile user entity. A mobile user entity is in particular a mobile terminal, a mobile phone, a portable laptop, a handheld or portable computer, a portable tablet computer.

The mobile communication network comprises a first radio node operating a first radio cell and a second radio node operating a second radio cell. The method comprises sending a handover request concerning a mobile user entity, UE, which is served by the first radio node, to the second radio node, wherein the handover request sent to the second radio node contains a user specific control channel search space definition or an indirect reference to a user specific control channel search space definition. In particular, the user specific control channel search space definition (which is, preferably, referenced by the indirect reference to the user specific control channel search space definition and thus the indirect reference to the user specific control channel search space definition) is information which is sufficient for the second radio node to establish a radio link between the mobile user entity and the second radio node.

Preferably, the mobile communication network comprises a first radio node operating a first radio cell, a second radio node operating a second radio cell and a third radio node operating a third radio cell. The method comprises sending a handover request concerning a mobile user entity, UE, which is served by the first radio node, to the second radio node and to the third radio node, wherein the handover request sent to the second radio node and to the third radio node contains a user specific control channel search space definition or an indirect reference to a user specific control channel search space definition. In particular, the user specific control channel search space definition (which is , preferably, referenced by the indirect reference to the user specific control channel search space definition and thus the indirect reference to the user specific control channel search space definition) is information which is sufficient for the second radio node and the third radio node to establish a radio link between the mobile user entity and the second radio node or between the mobile user entity and the third radio node, respectively.

Preferably, the mobile communication network comprises a first radio node operating a first radio cell, a second radio node operating a second radio cell and a third radio node operating a third radio cell. The method comprises sending a handover request concerning a mobile user entity, UE, which is served by the first radio node, to the second radio node or to the third radio node, wherein the handover request sent to the second radio node or to the third radio node contains a user specific control channel search space definition. In particular, the user specific control channel search space definition or (which is, preferably, referenced by the indirect reference to the user specific control channel search space definition and thus the indirect reference to the user specific control channel search space definition) is information which is sufficient for the second radio node or the third radio node, respectively, to establish a radio link between the mobile user entity and the second radio node or between the mobile user entity and the third radio node, respectively.

Preferably, if the handover request is accepted by the second radio node and/or by the third radio node, a handover request acknowledgment is received from the second radio node and/or from the third radio node, respectively. Preferably, if the handover request is accepted by the second radio node a handover request acknowledgment is received from the second radio node.

Preferably, if the handover request is accepted by the third radio node, a handover request acknowledgment is received from the third radio node.

Preferably, if the handover request is accepted by the second radio node and by the third radio node, a handover request acknowledgment is received from the second radio node and from the third radio node, respectively.

Preferably, the handover request is included in a handover request message. Preferably, the handover request acknowledgment is included in a handover request acknowledgment message.

The handover request contains a user specific control channel search space definition or an indirect reference to a user specific control channel search space definition.

In particular, it is noted that (the feature of) an indirect reference to a user specific control channel search space definition might be identical or not identical (e.g., is in a particular implementation identical, and in another particular implementation not identical) to (the feature of) a reference which might be comprised by a user specific control channel search space (see explanation of a user specific control channel search space definition).

Preferably, the indirect reference to a user specific control channel search space definition is a pointer.

In particular, it is noted that (the feature of) a pointer which is an indirect reference to and thus references to a user specific control channel search space definition might be identical or not identical (e.g., is in a particular implementation identical, and in another particular implementation not identical) to (the feature of) a pointer that might be comprised by a user specific control channel search space (see explanation of a user specific control channel search space definition).

Preferably, as mentioned above, the indirect reference to the user specific control channel search space definition is a pointer. Thus, the pointer references the user specific control channel search space definition. Preferably, the user specific control channel search space definition is stored in a database. The database might be implemented in a centralized control station. The database might be implemented as distributed data stores, e.g. in one or more of the radio nodes, in particular in the radio node sending the handover request, e.g. the first radio node, and/or in the radio node receiving the handover request, e.g. the second radio node and/or the third radio node. Preferably, by means of the pointer, the user specific control channel search space definition is retrieved from the database.

Preferably, the handover request contains a user identifier, UE ID, which identifies the mobile user entity and which is described in more detail below.

Preferably, an indirect reference to a user specific control channel search space definition is a UE ID.

Preferably, a UE ID is used as an indirect reference to a user specific control channel search space definition.

Preferably, the indirect reference to a user specific control channel search space definition is a UE ID, which is preferably contained in one or more of: a handover request, a handover request acknowledgement, a handover request rejection, a handover notification and a handover confirmation.

Preferably, the UE ID, which is preferably contained in the handover request, is used as an indirect reference to the user specific control channel search space definition. In other words, preferably, the indirect reference to the user specific control channel search space definition is a UE ID, user identifier, which is preferably contained in the handover request. Preferably, the UE ID is used as a pointer to a database where the user specific control channel search space definition is stored. The database might be implemented in a centralized control station. The database might be implemented as distributed data stores, e.g. in one or more of the radio nodes, in particular in the radio node sending the handover request, e.g. the first radio node, and/or in the radio node receiving the handover request, e.g. the second radio node and/or the third radio node. Preferably, by means of the UE ID, used as a pointer, the user specific control channel search space definition is retrieved from the database.

More generally, preferably, in case a user specific control channel search space definition is referenced by an indirect reference, the indirect reference is used to retrieve the user specific control channel search space definition from a database. The database might be implemented in a centralized control station. The database might be implemented as distributed data stores, e.g. in one or more of the radio nodes, in particular in the radio node sending the handover request, e.g. the first radio node, and/or in the radio node receiving the handover request, e.g. the second radio node and/or the third radio node, and further, preferably, the memory (memories) of one or more mobile user entity (entities) might be part of said (distributed) database. Preferably, by means of the indirect reference to the user specific control channel search space definition, the user specific control channel search space definition is retrieved from the database.

The handover request, in particular sent to the second and preferably to the third radio node, contains a user specific control channel search space definition or an indirect reference to a user specific control channel search space definition.

Preferably, the handover request, in particular sent to the second and/or third radio node, further contains one or more of: a UE identifier, UE ID, and a proposed frame number to switch the radio link from the first radio node towards the second radio node and/or towards the third radio node.

Preferably, the handover request sent to the second radio node further contains one or more of: a UE identifier, UE ID, and a proposed frame number to switch the radio link from the first radio node towards the second radio node.

Preferably, the handover request sent to third radio node further contains one or more of: a UE identifier, UE ID, and a proposed frame number to switch the radio link from the first radio node towards the third radio node.

Preferably, the handover request contains a UE identifier, UE ID.

Preferably, in case the first radio node sends the handover request to the second and to the third radio node, the UE ID contained in the handover request sent to the second radio node and the UE ID contained in the handover request sent to the third radio node is identical, because it is the UE ID used by the first radio node for communication with the mobile user entity.

Preferably, the handover request contains a user specific control channel search space definition. Usually, in case the first radio nodes sends the handover request to the second and the third radio node, the user specific control channel search space definition contained in the handover request sent to the second radio node and in the handover request sent to the third radio node is identical, because it is the user specific control channel search space definition which is used by the first radio node for communication with the mobile user entity.

Preferably, the handover request contains indirect reference to a user specific control channel search space definition. Usually, in case the first radio nodes sends the handover request to the second and the third radio node, the indirect reference to the user specific control channel search space definition contained in the handover request sent to the second radio node and in the handover request sent to the third radio node is identical, because the indirect reference references to the user specific control channel search space definition which is used by the first radio node for communication with the mobile user entity.

Preferably, a user specific control channel search space definition indicates a frequency space within a control channel of the first and/or second radio node, via which control and scheduling information between devices of the mobile communication network, in particular between the mobile user entity and the first and/or second radio node is exchanged, wherein the indicated frequency space comprises the user specific control channel search space.

Preferably, a user specific control channel search space definition indicates a frequency space within a control channel of the first, second and/or third radio node, via which control and scheduling information between devices of the mobile communication network, in particular between the mobile user entity and the first, second and/or third radio node is exchanged, wherein the indicated frequency space comprises the user specific control channel search space.

Preferably, a user specific control channel search space definition indicates a frequency space within a control channel of the first radio node, via which control and scheduling information between devices of the mobile communication network, in particular between the mobile user entity and the first radio node is exchanged, wherein the indicated frequency space comprises the user specific control channel search space.

Preferably, a user specific control channel search space definition indicates a frequency space within a control channel of the second radio node, via which control and scheduling information between devices of the mobile communication network, in particular between the mobile user entity and second radio node is exchanged, wherein the indicated frequency space comprises the user specific control channel search space.

Preferably, a user specific control channel search space definition indicates a frequency space within a control channel of the third radio node, via which control and scheduling information between devices of the mobile communication network, in particular between the mobile user entity and third radio node is exchanged, wherein the indicated frequency space comprises the user specific control channel search space.

A user specific control channel search space definition indicates a frequency space within a transmission time interval, TTI, containing a user specific control channel search space. The user specific control channel search space comprises the UE identifier and a reference (in particular a pointer) to data blocks containing up-link and/or down-link control information for the mobile user entity identified by the UE identifier.

Preferably, a user specific control channel search space definition indicates a frequency space within the control channel within a TTI, transmission time interval, containing the user specific control channel search space.

Preferably, the user specific control channel search space comprises, at each TTI, the UE-ID, UE identifier, and a reference (e.g. a pointer) to data blocks containing up-link and/or down-link control information for the user identified by the UE-ID.

Preferably, the user specific control channel search space is implemented as a physical resource block (PRB), in particular within a TTI, more specifically within a frequency space within a TTI. Preferably, the user specific control channel search space is implemented within a physical resource block (PRB), in particular within a TTI, more specifically within a frequency space within a TTI.

Preferably, the handover request contains a proposed frame number, or in other words a proposal for a frame number, to switch the radio link from the first radio node towards the second radio node. Preferably, the handover request contains a proposed frame number, or in other words a proposal for a frame number, to switch the radio link from the first radio node towards the second radio node or towards the third radio node.

Preferably, in case the first radio node sends the handover request to the second radio node and to the third radio node, the proposed frame number in the handover request sent to the second radio node and the proposed frame number in the handover request sent to the third radio node is the same proposed frame number. Alternatively, the proposed frame number in the handover request sent to the second radio node is different from the proposed frame number in the handover request sent to the third radio node.

Preferably, the handover request acknowledgment of the second radio node and/or of the third radio node contains a, in particular new, frame number for the switch of the radio link, a, in particular new, user specific control channel search space definition, a, in particular new, indirect reference to a user specific control channel search space definition and/or a, in particular new, UE identifier, wherein "new" means different from that used before the switching of the radio link.

Preferably, an indirect reference (e.g. "r1") to a user specific control channel search space definition (e.g. "d1") different from an indirect reference (e.g. "r2") to a user specific control channel search space definition (e.g. "d2") references to a user specific control channel search space definition ("d1") which is different from the user specific control channel search space definition ("d2") referenced by the different indirect reference ("r2"). In other words, a different indirect reference references to a different user specific control channel search space definition. The same indirect reference references to the same user specific control channel search space definition. If there are e.g. two indirect references which are identical, then the respective referenced user specific control channel search space definitions are identical. If there are e.g. two indirect references which are different (from each other), then the respective referenced user specific control channel search space definitions are different (from each other). In other words, for example, a (first) indirect reference references to a (first) user specific control channel search space definition, and a different (second) indirect reference references to a (second) user specific control channel search space definition which is consequently different from the (first) user specific control channel search space definition referenced by the (first) indirect reference. In other words, in particular, if the indirect reference is different (from another indirect reference), the user specific control channel search space definition is also different (from that referenced by the other indirect reference).

Preferably, the handover request acknowledgment of the second radio node contains a, in particular new, frame number for the switch of the radio link, a, in particular new, user specific control channel search space definition, a, in particular new, indirect reference to a user specific control channel search space definition and/or a, in particular new, UE identifier, wherein "new" means different from that used before the switching of the radio link.

Preferably, the handover request acknowledgment of the third radio node contains a, in particular new, frame number for the switch of the radio link, a, in particular new, user specific control channel search space definition, a, in particular new, indirect reference to a user specific control channel search space definition and/or a, in particular new, UE identifier, wherein "new" means different from that used before the switching of the radio link.

Preferably, the handover request acknowledgment of the second radio node contains a UE identifier identical to the UE identifier contained in the handover request.

Preferably, the handover request acknowledgment of the second radio node comprises a repetition of a message number of the handover request which is sent from the first radio node and received by the second radio node.

Preferably, the handover request acknowledgment of the third radio node contains a UE identifier identical to the UE identifier contained in the handover request.

Preferably, the handover request acknowledgment of the third radio node comprises a repetition of a message number of the handover request which is sent from the first radio node and received by the third radio node.

Preferably, the handover request acknowledgment of the second radio node contains a UE identifier different from the UE identifier contained in the handover request.

Preferably, the handover request acknowledgment of the third radio node contains a UE identifier different from the UE identifier contained in the handover request.

Preferably, the handover request acknowledgment of the second and/or third radio node contains a user specific control channel search space definition identical to the user specific control channel search space definition contained in the handover request.

Preferably, the handover request acknowledgment of the second and/or third radio node contains an indirect reference to a user specific control channel search space definition identical to the indirect reference to the user specific control channel search space definition contained in the handover request.

Preferably, the handover request acknowledgment of the second radio node contains a user specific control channel search space definition identical to the user specific control channel search space definition contained in the handover request.

Preferably, the handover request acknowledgment of the second radio node contains an indirect reference to a user specific control channel search space definition identical to the indirect reference to the user specific control channel search space definition contained in the handover request.

Preferably, the handover request acknowledgment of the second radio node does not contain a user specific control channel search space definition and thereby confirms the user specific control channel search space definition contained in the handover request.

Preferably, the handover request acknowledgment of the third radio node contains a user specific control channel search space definition identical to the user specific control channel search space definition contained in the handover request.

Preferably, the handover request acknowledgment of the third radio node contains an indirect reference to a user specific control channel search space definition identical to the indirect reference to the user specific control channel search space definition contained in the handover request.

Preferably, the handover request acknowledgment of the third radio node does not contain a user specific control channel search space definition and thereby confirms the user specific control channel search space definition contained in the handover request.

Preferably, the handover request acknowledgment of the second radio node contains a user specific control channel search space definition different from the user specific control channel search space definition contained in the handover request.

Preferably, the handover request acknowledgment of the second radio node contains an indirect reference to a user specific control channel search space definition different from the indirect reference to the user specific control channel search space definition contained in the handover request.

Preferably, the handover request acknowledgment of the third radio node contains a user specific control channel search space definition different from the user specific control channel search space definition contained in the handover request.

Preferably, the handover request acknowledgment of the third radio node contains an indirect reference to a user specific control channel search space definition different from the indirect reference to the user specific control channel search space definition contained in the handover request. Preferably, the handover request acknowledgment of the second radio node contains a frame number identical to the proposed frame number contained in the handover request.

Preferably, the handover request acknowledgment of the second radio node does not contain a frame number to switch the radio link and thereby confirms the proposed frame number contained in the handover request.

Preferably, the handover request acknowledgment of the third radio node contains a frame number identical to the proposed frame number contained in the handover request.

Preferably, the handover request acknowledgment of the third radio node does not contain a frame number to switch the radio link and thereby confirms the proposed frame number contained in the handover request.

Preferably, the handover request acknowledgment of the second radio node contains a frame number different from the proposed frame number contained in the handover request.

Preferably, the handover request acknowledgment of the third radio node contains a frame number different from the proposed frame number contained in the handover request.

Preferably, if both the second and the third radio node send a handover request acknowledgment, the values of one or more of: the frame number for the switch of the radio link, the user specific control channel search space definition, the indirect reference to a user specific control channel search space definition and the UE identifier contained in the handover request acknowledgment of the second radio node are different from the respective values of the frame number for the switch of the radio link, the user specific control channel search space definition, the indirect reference to the user specific control channel search space definition and the UE identifier contained in the handover request acknowledgment of the third radio node.

In detail, preferably, if both the second and the third radio node send a handover request acknowledgment, the frame number for the switch of the radio link contained in the handover request acknowledgment of the second radio node is different from the frame number for the switch of the radio link contained in the handover request acknowledgment of the third radio node.

Preferably, if both the second and the third radio node send a handover request acknowledgment, the user specific control channel search space definition contained in the handover request acknowledgment of the second radio node is different from the user specific control channel search space definition contained in the handover request acknowledgment of the third radio node.

Preferably, if both the second and the third radio node send a handover request acknowledgment, the indirect reference to a user specific control channel search space definition contained in the handover request acknowledgment of the second radio node is different from the indirect reference to a user specific control channel search space definition contained in the handover request acknowledgment of the third radio node.

Preferably, if both the second and the third radio node send a handover request acknowledgment, the UE identifier contained in the handover request acknowledgment of the second radio node is different from the UE identifier contained in the handover request acknowledgment of the third radio node.

Preferably, a handover notification is sent to the mobile user entity concerning the switching of the radio link.

Preferably, the handover notification comprises one or more of: a UE identifier, in particular to be used by the mobile user entity for and/or after switching of the radio link, a user specific control channel search space definition, in particular to be used by the mobile user entity for and/or after switching of the radio link, an indirect reference to a user specific control channel search space definition, in particular to be used by the mobile user entity for and/or after switching of the radio link, and a frame number to switch the radio link.

Preferably, the handover notification comprises one or more of: a UE identifier different from the UE identifier used by the mobile user entity before the switching of the radio link, a user specific control channel search space definition different from the user specific control channel search space definition used by the mobile user entity before the switching of the radio link, an indirect reference to a user specific control channel search space definition different from the user specific control channel search space definition used by the mobile user entity before the switching of the radio link, a frame number for the switching of the radio link and an indication of the radio node towards which the radio link is switched, in particular a cell identifier, cell ID.

Preferably, the handover notification comprises an indirect reference to a user specific control channel search space definition, wherein the indirect reference is different from an indirect reference to a user specific control channel search space definition. This implementation might apply in case the mobile user entity stores the indirect reference to a user specific control channel search space definition, and accesses the user specific control channel search space definition by means of the stored indirect reference.

Preferably, and usually, the mobile user entity does not store the indirect reference to a user specific control channel search space definition, but only the user specific control channel search space definition which is actually used and thus retrieves the needed user specific control channel search space definition by means of the indirect reference. The wording "the mobile user entity does not store the indirect reference" means "does not store longer than needed for processing the indirect reference by retrieving the user specific control channel search space definition from a database".

Preferably, the indirect reference might be stored by the mobile user entity, but usually the mobile user entity stores only the needed user specific control channel search space definition. Therefore, in case the mobile user entity is notified about a user specific control channel search space definition different from the user specific control channel search space definition used before switching of the radio link, the mobile user entity receives a handover notification comprising the user specific control channel search space definition or an indirect reference to the user specific control channel search space definition and can retrieve the user specific control channel search space definition from a database as explained above.

Preferably, a handover notification is sent to the mobile user entity concerning the switching of the radio link. Preferably, the handover notification is included in a handover notification message. Preferably, the handover notification comprises a UE identifier. Preferably, the handover notification comprises a UE identifier different from the UE identifier used by the mobile user entity and by the first radio node serving the user entity before the switching of the radio link. Preferably, the handover notification comprises a user specific control channel search space definition. Preferably, the handover notification comprises a user specific control channel search space definition different from the user specific control channel search space definition used by the mobile user entity and the first radio node serving the mobile user entity before the switching of the radio link. Preferably, the handover notification comprises an indirect reference to user specific control channel search space definition different from the user specific control channel search space definition used by the mobile user entity and the first radio node serving the mobile user entity before the switching of the radio link. Preferably, the handover notification comprises a frame number for the switching of the radio link. Preferably, the handover notification comprises an indication of the radio node towards which the radio link is switched. Preferably, the handover notification comprises an indication of the second radio node as the radio node to which the radio link is switched. Preferably, the handover notification comprises an indication of the third radio node as the radio node to which the radio link is switched. Preferably, the indication denotes that the radio link is switched to the second radio node. Preferably, the indication denotes that the radio link is switched to the third radio node. Preferably, in case the radio link is switched to the second radio node, the indication is the indication that the radio link is switched to the second radio node. Preferably, in case the radio link is switched to the third radio node, the indication is the indication that the radio link is switched to the third radio node. Preferably, the indication of the radio node is a cell identifier, cell ID, this means the radio node to which the radio link is switched is indicated by the cell ID of the radio cell which is operated by the radio node. As each radio cell of the mobile communication network is associated to a particular radio node, by the cell ID of the radio cell the radio node operating the radio cell can be identified and thus indicated.

Preferably, in case the handover request is sent to the second radio node, it is determined, in particular based on more or more of: a rejection of the handover request by the second radio node, load balancing considerations, a back-haul quality in regard of the second radio node, to switch the radio link between the mobile user entity and the first radio node towards the second radio node. Preferably then, according to said determination, by means of the user specific control channel search space definition the radio link between the mobile user entity and the second radio node is established by switching the radio link between the mobile user entity and the first radio node from the first radio node towards the second radio node.

The user specific control channel search space definition which is preferably contained in the handover request sent to the second radio node contains information which is sufficient for the second radio node to establish communication with the mobile user entity without the need to implement a RACH procedure.

Preferably, in case the handover request is sent to the second radio node, in particular by the first radio node, from the mobile user entity a measurement report is received about the first radio cell and further about the second radio cell, in particular comprising measurement data about a signal strength of the first radio cell measured by the mobile user entity and a signal strength of the second radio cell measured by the mobile user entity. Then preferably, in particular by the first radio node it is decided, based on the measurement report that a switching of the radio link between the mobile user entity and the first radio node towards the second radio node is appropriate.

Preferably, in case the handover request is sent to the second and third radio node, it is determined, in particular based on more or more of: a rejection of the handover request by the second and/or third radio node, load balancing considerations in regard of the second and/or third radio node, a back-haul quality in regard of the second and/or third radio node, to switch the radio link between the mobile user entity and the first radio node towards the second radio node or towards the third radio node. Preferably, then , according to said determination, by means of the user specific control channel search space definition the radio link between the mobile user entity and the second radio node is established by switching the radio link between the mobile user entity and the first radio node from the first radio node towards the second radio node or, according to said determination, by means of the user specific control channel search space definition the radio link between the mobile user entity and the third radio node is established by switching the radio link between the mobile user entity and the first radio node from the first radio node towards the third radio node.

Preferably, the user specific control channel search space definition, which is preferably contained in the handover request sent to the second radio node and to the third radio node, contains information which is sufficient for the second radio node and for the third radio node to establish communication with the mobile user entity without the need to implement a RACH procedure.

Preferably, in case the handover request is sent to the second and to the third radio node, in particular by the first radio node, from the mobile user entity a measurement report about the first radio cell and further about the second radio cell and/or about the third radio cell is received, in particular comprising measurement data about a signal strength of the first radio cell measured by the mobile user entity and a signal strength of the second radio cell measured by the mobile user entity and/or of the third radio cell measured by the mobile user entity. Then, preferably,, in particular by the first radio node, it is decided, based on the measurement report that a switching of the radio link between the mobile user entity and the first radio node towards the second radio node and/or towards the third radio node is appropriate.

Preferably, it is determined, in particular by the first radio node, to switch the radio link between the mobile user entity and the first radio node towards the second radio node or towards the third radio node. Preferably, the determination to switch the radio link between the mobile user entity and the first radio node towards the second radio node or towards the third radio node is based on a rejection of the handover request by the second radio node or by the third radio node. Preferably, the rejection of the handover request is included in a handover request rejection message. Preferably, the determination to switch the radio link between the mobile user entity and the first radio node towards the second radio node or towards the third radio node is based on load balancing considerations. Preferably, the determination to switch the radio link between the mobile user entity and the first radio node towards the second radio node or towards the third radio node is based on a back-haul quality in regard of the second radio node and/or of the third radio node.

Preferably, it is determined, in particular by the first radio node, to switch the radio link between the mobile user entity and the first radio node towards the second radio node. Preferably, the determination to switch the radio link between the mobile user entity and the first radio node towards the second radio node is based on the handover request acknowledgement of the second radio node, and preferably, alternatively or in addition on a rejection of the handover request by the third radio node. Preferably, the rejection of the handover request by the third radio node is included in a handover request rejection message. Preferably, the determination to switch the radio link between the mobile user entity and the first radio node towards the second radio node is based on load balancing considerations. Preferably, the determination to switch the radio link between the mobile user entity and the first radio node towards the second radio node is based on a back-haul quality in regard of the second radio node, and preferably, alternatively or in addition on a back-haul quality of the third radio node.

Preferably, it is determined, in particular by the first radio node, to switch the radio link between the mobile user entity and the first radio node towards the third radio node. Preferably, the determination to switch the radio link between the mobile user entity and the first radio node towards the third radio node is based on the handover request acknowledgement of the third radio node, and preferably, alternatively or in addition on a rejection of the handover request by the second radio node. Preferably, the rejection of the handover request by the second radio node is included in a handover request rejection message. Preferably, the determination to switch the radio link between the mobile user entity and the first radio node towards the third radio node is based on load balancing considerations. Preferably, the determination to switch the radio link between the mobile user entity and the first radio node towards the third radio node is based on a back-haul quality in regard of the third radio node, and preferably, alternatively or in addition on a back-haul quality of the second radio node.

Preferably, according to said determination, the radio link is established between the mobile user entity and the second radio node or between the mobile user entity and the third radio node by switching the radio link between the mobile user entity and the first radio node from the first radio node towards the second radio node or towards the third radio node, respectively.

Preferably, according to said determination, the radio link is established between the mobile user entity and the second radio node by switching the radio link between the mobile user entity and the first radio node from the first radio node towards the second radio node.

Preferably, according to said determination, the radio link is established between the mobile user entity and the third radio node by switching the radio link between the mobile user entity and the first radio node from the first radio node towards the third radio node.

Preferably, the radio link is established, for example by the second radio node, by means of the user specific control channel search space definition. The second radio node retrieves from the user specific control channel search space definition the search space in the user specific control channel. In the search space, preferably indicated by the UE ID of the mobile user entity which is to be served by the second radio node after switching of the radio link, a pointer is contained which points to data blocks in the user specific control channel, wherein the data block belongs to the respective user specific search space (definition). These data blocks comprise in particular the control information (e.g. scheduling information) needed to establish the radio link between the mobile user entity (identified by the UE ID / corresponding to the user specific control channel search space definition) and the second radio node. By this control (scheduling) information, the second radio node is able to establish and thus establishes the radio link between the second radio link and the mobile user entity. Thus, the user specific control channel search space definition is information enough for the second radio node to establish the radio link with the mobile user entity, because by means of the user specific control channel search space definition, the second radio node can retrieve from the (user specific) control channel the (control, scheduling) information needed to establish the radio link with the mobile user entity. Preferably, what has been described with regard to the second radio node, applies analogously to the third radio node, in case the radio link is switched from the first radio node to the third radio node.

Further, preferably, in case the user specific control channel search space definition is referenced by the indirect reference to the user specific control channel search space definition, then (indirectly) the indirect reference to the user specific control channel search space definition is information enough for, e.g., the second radio node (if the radio link is switched to the second radio node) to establish the radio link with the mobile user entity. This is, because by the indirect reference to the user specific control channel search space definition, the respective user specific control channel search space definition can be retrieved and then the needed respective (control, scheduling) information can be derived from the (user specific) control channel as explained above. Preferably, what has been described with regard to the second radio node, applies analogously to the third radio node, in case the radio link is switched from the first radio node to the third radio node.

Preferably, from the mobile user entity, a measurement report is received about the first radio cell and further about the second radio cell and/or about the third radio cell, in particular comprising measurement data about a signal strength of the first radio cell measured by the mobile user entity and a signal strength of the second radio cell measured by the mobile user entity and/or of the third radio cell measured by the mobile user entity. Preferably, based on the measurement report a decision is made that a switching of the radio link between the mobile user entity and the first radio node towards the second radio node or towards the third radio node is appropriate. Preferably, the measurement report from the mobile user entity about the signal strength of the first and of the second and/or third radio cell is received by the first radio node. Preferably, the first radio node based on the measurement report makes a decision that a switching of the radio fink between the mobile user entity and the first radio node towards the second radio node or towards the third radio node is appropriate. Preferably, the first radio node makes a decision based on this measurement report to send a handover request to the second and/or third radio node. Preferably, the first radio nodes makes a decision to send a handover request to the second and the third radio node based on the measurement report, on the back-haul quality of the second and/or third radio node and/or on the load of the second and/or third radio node. Preferably, the measurement report is included in a measurement report message.

Preferably, from the mobile user entity, a measurement report is received about the first radio cell and further about the second radio cell, in particular comprising measurement data about a signal strength of the first radio cell measured by the mobile user entity and a signal strength of the second radio cell measured by the mobile user entity. Preferably, based on the measurement report a decision is made that a switching of the radio link between the mobile user entity and the first radio node towards the second radio node. Preferably, the measurement report from the mobile user entity about the signal strength of the first and of the second radio cell is received by the first radio node. Preferably, the first radio node based on the measurement report makes a decision that a switching of the radio link between the mobile user entity and the first radio node towards the second radio node is appropriate. Preferably, the first radio node makes a decision based on this measurement report to send a handover request to the second radio node. Preferably, the first radio nodes makes a decision to send a handover request to the second radio node based on the measurement report, on the back-haul quality of the second and/or third radio node and/or on the load of the second radio node. Preferably, the measurement report is included in a measurement report message.

Preferably, the decision to send a handover request to the second and/or third radio node is based on the measurement report and/or based on load balancing considerations in regard of the second and/or third radio node.

Preferably, the decision to send a handover request to the second radio node is based on the measurement report and/or based on load balancing considerations in regard of the second radio node.

Preferably, the first radio node receives a measurement report from the mobile user entity, indicating that the signal strength of the second radio cell is better than the signal strength of the first radio cell. Further, alternatively or in addition, the first radio node determines that the load on the second radio node is lower than the load on the first radio node, because the second radio node serves less user devices (e.g. mobile phones) than the first radio node. Therefore, the first radio node decides to send a handover request to the second radio node. Preferably, the decision to send a handover request to the second radio node is not based on load balancing considerations, but the load balancing considerations might be considered on the determination, if the radio link is switched towards the second radio node, after the second radio node received a handover request from the first radio node and accepts the handover request by sending a handover request acknowledgment to the first radio node. Then, as already mentioned, the first radio node considers, preferably amongst other criteria (signal strength, back-haul quality) as described in detail through the specification, if the radio link is switched towards the second third radio node.

Preferably, the first radio node receives a measurement report from the mobile user entity, indicating that the signal strength of the second radio cell is better than the signal strength of the first and of the third radio cell, and that the signal strength of the third radio cell is better than the signal strength of the first radio cell. Further, the first radio node determines that the load on the second radio node is much higher than the load on the third radio node, because the second radio node serves much more user devices (e.g. mobile phones) than the third radio node. Therefore, the first radio node decides to send a handover request only to the third radio node, although the signal strength of the second radio node is higher than the signal strength of the third radio cell. Preferably, the decision to send a handover request to the second and/or third radio node is not based on load balancing considerations, but the load balancing considerations might be considered on the determination, if the radio link is switched towards the second or the third radio node, after the second and third radio node received a handover request from the first radio node and accept the handover request by sending a handover request acknowledgment to the first radio node. Then, as already mentioned, the first radio node considers, preferably amongst other criteria (signal strength, back-haul quality) as described in detail through the specification, if the radio link is switched towards the second or towards the third radio node.

Preferably, the mobile user entity sends a measurement report about the signal strength of the first radio cell and about only one of the second and third radio cell. For example the mobile user entity sends a measurement report about the signal strength of the first radio cell and about the signal strength of the second radio cell which is higher than the signal strength of the first radio cell, but the mobile user entity does not send measurement data about the third radio cell. Nevertheless, based on load balancing considerations, the first radio node determines to send a handover request not to the second radio node, but to the third radio node (which is not the node to which the radio cell belongs, of which the signal strength has been reported by the mobile user entity). This decision might also or alternatively be based on the back-haul quality of the second and third radio node and/or on the knowledge of the signal strength of the third radio node which has been reported by further mobile user entities/devices different from the mobile user entity which send the above measurement report which omits the signal strength of the third radio cell.

Preferably, the first radio node decides to switch the radio link not to the second radio node, but to the third radio node (which is not the node to which the radio cell belongs, of which the signal strength has been reported by the mobile user entity in the measurement report). This decision is preferably based on a rejection of the handover request by the second radio node, while the third radio node sends a handover request acknowledgment to the first radio node. Preferably, the decision is additionally or alternatively based on the back-haul quality of the second and third radio node and/or on the knowledge of the signal strength of the third radio cell which has been reported by further mobile user entities to the first radio node which then compares the signal strength of the second radio cell with the signal strength of the third radio cell.

Preferably, the handover request sent to and received by the second radio node is accepted by the second radio node, if the second radio node has sufficient radio resources for serving the mobile user entity, or if the second radio node determines that the second radio node has sufficient resources for serving the mobile user entity.

Preferably, the handover request sent to and received by the third radio node is accepted by the third radio node, if the third radio node has sufficient radio resources for serving the mobile user entity, or if the third radio node determines that the third radio node has sufficient resources for serving the mobile user entity.

Preferably, a radio node serves a mobile user entity by providing a radio link between the mobile user entity and the radio node so that the mobile user entity can communicate via the radio node - over the back-haul network part of the mobile communication network, this means the network part behind the radio node from the perspective of the mobile user entity - with further mobile user entities/devices or with further user entities (persons, computers, servers) connected wirelessly or by wire with the mobile communication network or according to another termination being part of the mobile communication network or of a communication network of which the mobile communication network is part of.

Preferably, the handover is accepted by the second and/or the third radio node, if the second radio node and/or the third radio node, respectively, has sufficient radio resources for serving the mobile user entity.

Preferably, the radio node has sufficient resources for serving the mobile user entity, if the signal strength of the radio cell of the radio node covering the mobile user entity is enough to provide a radio link between the mobile user entity and the radio node, in particular a radio link enabling a communication according to the QoS (QoS = Quality of Service) criteria, in short a communication with a good quality, e.g., having good sound (strong, clear sound, low noise) and good data transport quality (speed, volume of the data transport).

Preferably, the measurement data indicate that a signal strength of the second radio cell is better than a signal strength of the first radio cell.

Preferably, the feature "signal strength of a radio cell" comprises an indication of the uplink radio quality (wherein "uplink" is from a mobile user entity to a radio node). Alternatively or in combination, preferably, the feature "signal strength of a radio cell" comprises an indication of the downlink radio quality (wherein "downlink" is from a radio node to a mobile user entity).

Preferably, the measurement data indicate that a signal strength of the third radio cell is better than a signal strength of the first radio cell.

Preferably, the measurement data indicate that a signal strength of the second radio cell is better than a signal strength of the third radio cell.

Preferably, the measurement data indicate that a signal strength of the third radio cell is better than a signal strength of the second radio cell.

Preferably, the method for providing a handover is implemented for 5G networks taking into account the advanced capabilities of the new 5G air interface and the new 5G user specific control channel, which preferably is implemented according to the above described user specific control channel search space definition.

Preferably, at least one of: the first radio node, the second radio node and the third radio node is a processing platform operating a plurality of radio cells.

Preferably, at least one of: the first radio node, the second radio node and the third radio node operates a plurality of radio cells.

Preferably, the 5G handover is independent of the 5G network (structure) which supports a centralized and a de-centralized architecture. Preferably, the centralized architecture does not support dedicated radio nodes (base stations), in particular eNB (eNB = evolved Node B, according to the LTE terminology), i.e. part of the L1, the L2 and the L3 (L = layer) functionality for many radio cells are computed within one processing platform. Preferably, within a centralized architecture there will be no X2 based communication between serving radio nodes (wherein X2 is an indication for the interface and communication between radio nodes). The processing platform has to provide X2 interfaces to other processing platforms or to dedicated radio nodes of the de-centralized architecture. Preferably, the de-centralized architecture is defined by dedicated radio nodes (base stations, eNB), which are operating a limited number of e.g. 3 radio cells.

Preferably, the first radio node is termed source radio node or source node, and the first radio cell is termed source radio cell or source cell. Further, preferably, the second radio node is termed target radio node or target node, and the second radio cell is termed target radio cell or target cell. Further, preferably, the third radio node is termed other radio node or other node, and the third radio cell is termed other radio cell or other cell.

### Brief description of the figures

The teaching of the invention will be more completely understood by the following detailed description with reference to the figures, wherein
- Fig. 1: depicts schematically an overview of a mobile communication network
- Fig. 2: depicts a signalling diagram of a method for providing a handover
- Fig. 3: depicts a schematic block diagram of a principle user specific control channel structure
- Fig. 4: depicts schematically block diagrams of a handover without change of a user specific control channel search space definition
- Fig. 5: depicts schematically block diagrams of a handover with change of a user specific control channel search space definition
- Fig. 6: depicts a further signalling of a method for providing a handover

### Detailed description

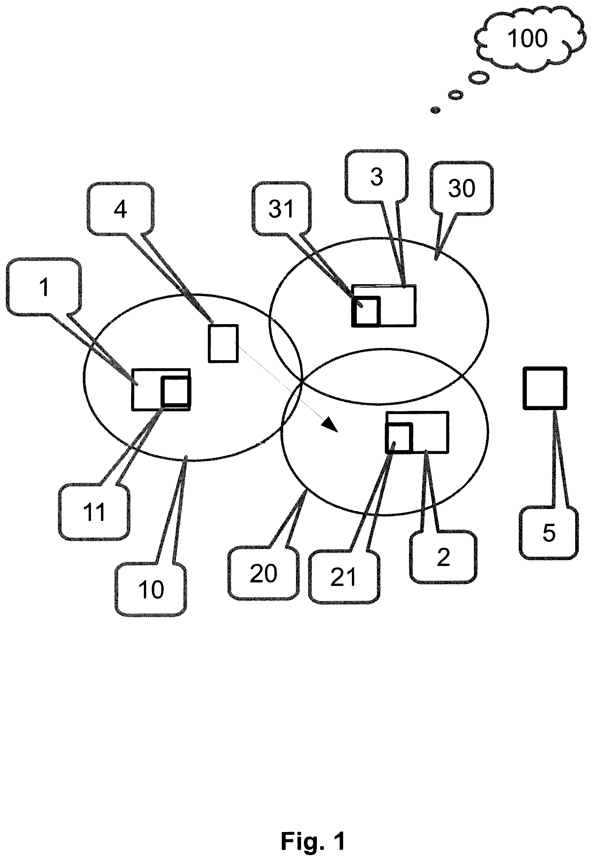

Figure 1 shows illustratively a mobile communication network 100 comprising a first radio node 1 operating a first radio cell 10, a second radio node 2 operating a second radio cell 20 and a third radio node 3 operating a third radio cell 30. A mobile user entity 4 is situated in the first radio cell 10. As the first radio cell 10 is operated by the first radio node 1, the mobile user entity 4 is served by the first radio node 1, in particular via a radio link between the mobile user entity 4 and the first radio node 1. Via the radio link between the mobile user entity 4 and the first radio node 1, the mobile user entity 4 can communicate over the back-haul part of the mobile communication network 100 which lies behind the radio node 1 from the perspective of the mobile user entity 4. Further, preferably as depicted in figure 1, the first radio node 1 has a control unit 11, the second radio node 2 has a control unit 21 and the third radio node has a control unit 31.Preferably, a centralized control station 5 is part of the mobile communication network 100.

Preferably, a method for providing a handover is implemented in regard of the mobile user entity 4, the first radio node 1 and the second radio node 2. In particular, the third radio node 3 is not comprised in the mobile communication network 100 (as variation to the mobile communication network 100 depicted in figure 1) and/or the third radio node 3 is not involved in the method for providing a handover from the first radio node 1 towards the second radio node 2. In a first scenario, the mobile user entity 4 is served by the first radio node 1 within the first radio cell 10 and then moves towards the second radio cell 20 of the second radio node 2. Preferably, the mobile user entity 4 determines that the signal strength of the second radio cell 20 is stronger than the signal strength of the first radio cell 10 and a handover of the mobile user entity 4 is implemented towards the second radio node 2 as will be described in detail in the following.

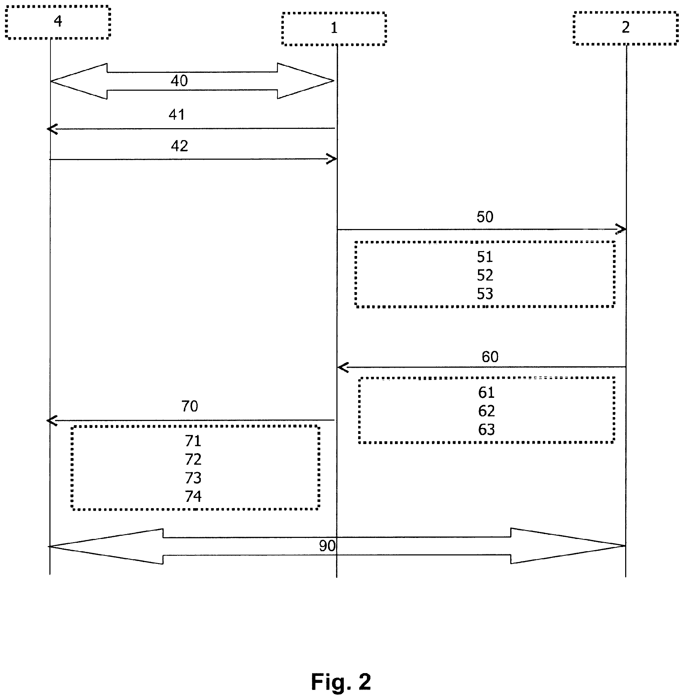

Figure 2 shows a signalling diagram including messages exchanged between the mobile user entity 4, the first radio node 1 and the second radio node 2. In a first scenario, a radio link is established between the mobile user entity 4 and the first radio node 1. The double arrow 40 symbolizes the communication between the mobile user entity 4 and the first radio node 1.Preferably, the mobile user entity 4 is configured, in particular by the first radio node 1, to carry out measurements to support the execution of the method for providing a handover. For this reason, a measurement configuration 41 is provided to the mobile user entity 4. Preferably, the mobile user entity 4 receives the measurement configuration 41, in particular included in a measurement configuration message, from the first radio node 1.Preferably, in case of a measurement event, the mobile user entity 4 sends a measurement report 42 to the first radio node 1. In particular, a measurement event occurs, if the mobile user entity 1 has determined based on its measurements that the signal strength of the second radio cell 20 operated by the second radio node 2 is higher than the signal strength of the first radio cell 10 operated by the first radio node 1. Accordingly, the first radio node 1 receives from the mobile user entity 4 a measurement report 42 about the first radio cell 10 and further about the second radio cell 20. Based on the measurement report 42, in particular because the signal strength of the second radio cell 20 is higher than the signal strength of the first radio cell 10, the first radio node 1 decides that a switching of the radio link between the mobile user entity 4 and the first radio node 1 towards the second radio node 2 is appropriate.

The first radio node 1 sends a handover request 50 concerning the mobile user entity 4 to the second radio node 2, indicating that the first radio node 1 wants to handover the mobile user entity 4 to the second radio node 2, this means to switch the radio link between the mobile user entity 4 and the first radio node 1 towards the second radio node 2, so that then the mobile user entity 4 is after the handover served by the second radio node 2 instead of the first radio node 1. The handover request 50 sent to the second radio node 2 contains information sufficient for the second radio node 2 to establish a radio link between the mobile user entity 4 and the second radio node 2.

Preferably, the information contained in the handover request 50 comprises one or more of: a UE identifier 51 of the mobile user entity 4, a user specific control channel search space definition 52 and a proposal of the first radio node 1 for a frame number 53 to switch the radio link from the first radio node 1 towards the second radio node 2.

The UE identifier 51 of the mobile user entity 4 identifies the mobile user entity 4.

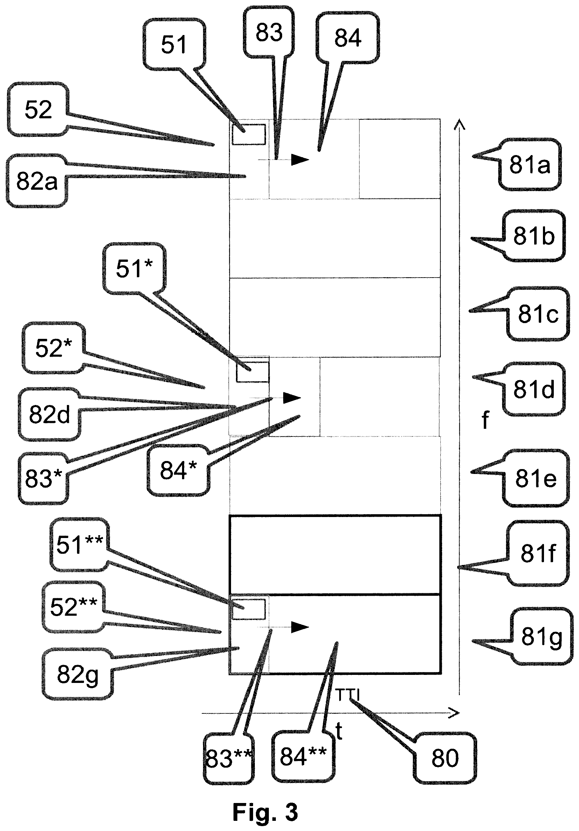

The user specific control channel search space definition 52 is in the following explained with reference to figure 3. Illustratively, the user specific control channel search space definition 52 of the mobile user entity 4 indicates a frequency space 81a within a transmission time interval, TTI, 80 containing a user specific control channel search space 82a.The user specific control channel search space 82a comprises the UE identifier 51 of the mobile user entity 4 and a reference 83, e.g. a pointer, to data blocks 84 containing up-link and/or down-link control information, e.g. scheduling information, for the mobile user entity 4 identified by the UE identifier 51. Figure 3 depicts a TTI 80 over the time axis t with frequency spaces 81a - 81g (generically 81) on the frequency axis f. Frequency space 81a contains the user specific control channel search space 82a of mobile user entity 4. Further frequency spaces, e.g. 81d and 81g, contain further user specific control channel search spaces 82d and 82g, respectively, in particular of other mobile user entities. The further user specific control channel search spaces 82d and 82g have the same structure as the user specific control channel search space 82a of mobile user entity 4. The further user specific control channel search spaces 82d and 82g contain the respective UE identifier of the respective further mobile user entity and a respective reference to data blocks where up-link and/or downlink information for the respective further mobile user entity is stored. For example, as depicted in figure 3, the user specific control channel search space definition 52* of a further mobile user entity (different from mobile user entity 4) indicates frequency space 81d within the transmission time interval, TTI, 80 and contains a user specific control channel search space 82d comprising the UE identifier 51* of the further mobile user entity and reference 83* to data blocks 84* containing up-link and/or down-link control information, e.g. scheduling information, for the further mobile user entity identified by the UE identifier 51*. Further exemplary, the user specific control channel search space definition 52** of another further mobile user entity (different from mobile user entity 4) indicates frequency space 81g within the transmission time interval, TTI, 80 and contains a user specific control channel search space 82g comprising the UE identifier 51** of the other further mobile user entity and reference 83** to data blocks 84** containing up-link and/or down-link control information, e.g. scheduling information, for the other further mobile user entity identified by the UE identifier 51**.

Preferably, the UE identifier 51 is contained two times in the handover request 50 (or analogously, preferably,, in the handover request acknowledgment 60, the handover notification 70, the handover confirmation message and/or the message comprising a rejection of the handover request 50), namely once separately, and once additionally included within the user specific search space definition 52 as depicted in figure 3. This means, preferably, the handover request 50 (or analogously preferably , the handover request acknowledgment 60, the handover notification 70, the handover confirmation message and/or the message comprising a rejection of the handover request 50) firstly indicates the mobile user entity 4 by its UE identifier 51 and further contains the user specific control channel search space definition 52 which provides for the mobile user entity 4, identified by the UE identifier 51 of mobile user entity 4, a reference 83 to data blocks 84 with control information for the mobile user entity 4.

Preferably, on the one hand, similar as above, the handover request 50 (or analogously, preferably, in the handover request acknowledgment 60, the handover notification 70, the handover confirmation message and/or the message comprising a rejection of the handover request 50) comprises the UE identifier 51 and the user specific control channel search space definition 52. On the other hand, the UE identifier 51 is not included additionally within the user specific control channel search space definition 52, but the UE identifier 51 and the user specific control channel search space definition 52 contained in the handover request 50 (or analogously, preferably, in the handover request acknowledgment 60, the handover notification 70, the handover confirmation message and/or the message comprising a rejection of the handover request 50) are linked in such a way (e.g. by a reference or by brackets) that this link clearly indicates that the user specific control channel search space definition 52 belongs to the respective UE identifier 51.

Preferably, the UE identifier 51 (61, 71) is used as an indirect reference to a user specific control channel search space definition 52 (62, 72).

Preferably, the handover request 50 (or analogously, preferably, the handover request acknowledgment 60, the handover notification 70, the handover confirmation message and/or the message comprising a rejection of the handover request 50) contains only a UE identifier 51. The receiver of the handover request 50 (or analogously, preferably, the handover request acknowledgment 60, the handover notification 70, the handover confirmation message and/or the message comprising a rejection of the handover request 50), e.g. second radio node 2 or third radio node 3, has to look-up the user specific control channel search space definition 52 in a data base or in a look-up table (e.g. implemented in a centralized control station 5 or at the respective radio node, e.g. the first radio node 1, the second radio node 2 or third radio node 3, respectively), where the user specific control channel search space definition 52 is indexed (and thereby (indirectly) referenced) by the respective UE identifier 51.

Preferably, by the UE identifier 51 and the user specific control channel search space definition 52 of mobile user entity 4 which is contained in the handover request 50 received by the second radio node 2, the second radio node 2 gets information sufficient to establish a communication with the mobile user entity 4. Further, preferably, by the UE identifier 51, by the user specific control channel search space definition 52 and by the frame number 53 proposed by the first radio node 1 to switch the radio link, the second radio node 2 gets information sufficient for the second radio node 2 for the switching of the radio link between the mobile user entity 4 and the first radio node 1 towards the second radio node 2. In other words, preferably, the information comprising the UE identifier 51 and the user specific control channel search space definition 52 of mobile user entity 4 which is contained in the handover request 50 received by the second radio node 2, is sufficient information for the second radio node 2 to establish a communication with the mobile user entity 4. Further, preferably, the information comprising the UE identifier 51, the user specific control channel search space definition 52 and the frame number 53 proposed by the first radio node 1 to switch the radio link is sufficient information for the second radio node 2 for the switching of the radio link between the mobile user entity 4 and the first radio node 1 towards the second radio node 2.

Preferably, if the handover request 50 of the first radio node 1 is accepted by the second radio node 2, the first radio node 1 receives a handover request acknowledgment 60 from the second radio node 2.

Preferably, the second radio node 2 accepts the handover request 50 of the first radio node 1 and sends a handover request acknowledgment 60 to the first radio node 1.

Preferably, the second radio node 2 accepts the handover request 50, in case the second radio node 2 has enough resources to serve the mobile user entity 4, in particular because the second radio cell 20 has a signal strength sufficient to provide a good communication for the mobile user entity 4 via the second radio node 2 over the mobile communication network 100.

Preferably, in case the second radio node 2 accepts the handover request 50, the second radio node 2 sends a handover request acknowledgment 60 to the first radio cell 1, indicating that the second radio node 2 accepts the handover request 50, this means that the second radio node 2 accepts that the radio link between the mobile user entity 4 and the first radio node 1 is switched from the first radio node 1 towards the second radio node 2.

Preferably, the handover request acknowledgment 60 of the second radio node 2 contains a UE identifier 61 identical to the UE identifier 51 contained in the handover request 50.

Preferably, the handover request acknowledgment 60 of the second radio node 2 contains a UE identifier 61 different to the UE identifier 51 contained in the handover request 50, This might be in particular the case, if the second radio node 2 determines that the UE identifier 51 contained in the handover request 50 is already used for a further mobile user entity, this means for a mobile user entity different from the mobile user entity 4 so that the second radio node 2 assigns a new UE identifier 61 for the mobile user entity 4, which should be used for the mobile user entity 4 after switching the radio link between the mobile user entity 4 and the first radio node 1 from the first radio node 1 towards the second radio node 2. New UE identifier 61 means a UE identifier 61 different from the UE identifier 51.

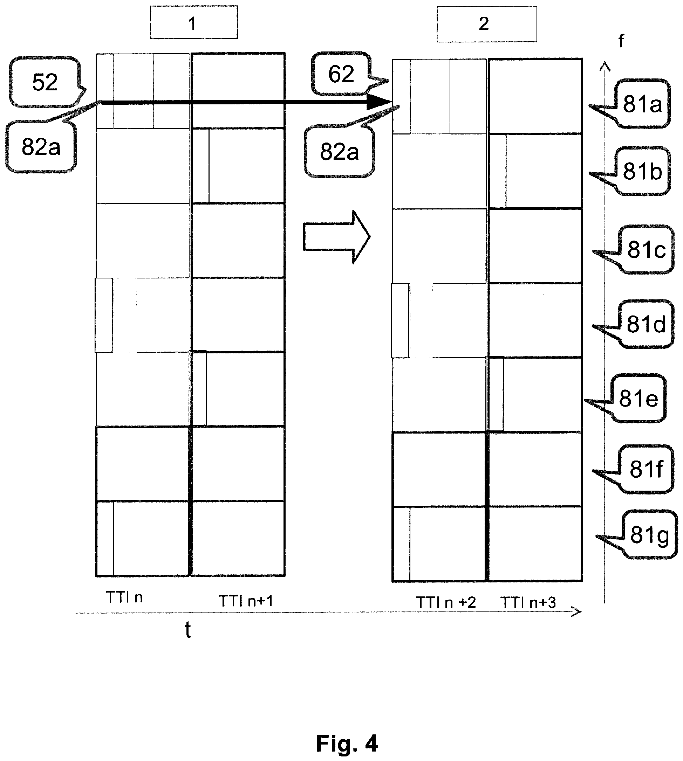

Preferably, the handover request acknowledgment 60 of the second radio node 2 contains a user specific control channel search space definition 62 identical to the user specific control channel search space definition 52 contained in the handover request 50. In this case, depicted in figure 4, the user specific control channel search space definition 62 used by the second radio node 2 after switching of the radio link of the mobile user entity 4 from the first radio node 1 towards the second radio node 2 is identical to the user specific control channel search space definition 52 used by the first radio node 1 before switching of the radio link of the mobile user entity 4 from the first radio node 1 towards the second radio node 2. In particular, the user specific control search space 82a comprised by the user specific control channel search space definition 52 is allocated in the same frequency space 81a as the user specific control channel search space 82a comprised by the user specific control channel search space definition 62. In other words, the user specific control channel search space definition 52 used by the first radio node 1 before switching of the radio link of the mobile user entity 4 from the first radio node 1 towards the second radio node 2 and the user specific control channel search space definition 62 used by the second radio node 2 after switching of the radio link of the mobile user entity 4 from the first radio node 1 towards the second radio node 2 allocate the user specific control channel search space 82a in the same frequency space 81a.

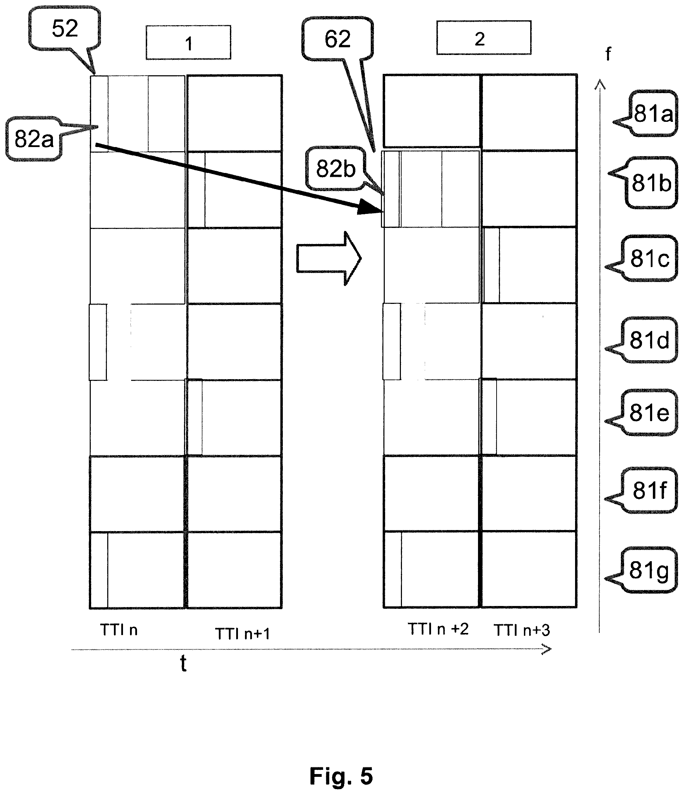

Preferably, the handover request acknowledgment 60 of the second radio node 2 contains a user specific control channel search space definition 62 different from the user specific control channel search space definition 52 contained in the handover request 50 (see figure 5). In particular, the user specific control channel search space definition 52 used by the first radio node 1 before switching of the radio link of the mobile user entity 4 from the first radio node 1 towards the second radio node 2 allocates the user specific control channel search space 82a in frequency space 81a and the user specific control channel search space definition 62 used by the second radio node 2 after switching of the radio link of the mobile user entity 4 from the first radio node 1 towards the second radio node 2 allocates the user specific control channel search space 82b in the frequency space 81b. In particular, the user specific control search space 82a comprised by the user specific control channel search space definition 52 is allocated in a frequency space, namely frequency space 81a, different from the frequency space, namely frequency space 81b, where the user specific control channel search space 82b comprised in the user specific control channel search space definition 62 is allocated. This might be in particular the case, if the frequency space 81a indicated by the user specific control channel search space definition 51 used by the first radio node 1, is reserved by the second radio node 2 for a user specific control channel search space definition of another mobile user entity different from the mobile user entity 4. In this case, the user specific control channel search space definition 62 used by the second radio node 2 for the mobile user entity 4 after switching of the radio link of the mobile user entity 4 from the first radio node 1 towards the second radio node 2 is different from the user specific control channel search space definition 52 used by the first radio node 1 before switching of the radio link of the mobile user entity 4 from the first radio node 1 towards the second radio node 2. In figure 5, the second radio node 2 uses frequency space 81b for the user specific control channel search space definition 62 of the mobile user device 4. In other words, the user specific control channel search space definition 62 used by the second radio node 2 for the mobile user entity 4 indicates frequency space 81b, where the user specific control channel search space 82b of mobile user entity 4 is located.

Preferably, the handover request acknowledgment 60 of the second radio node 2 contains a frame number 63 identical to the proposed frame number 53 contained in the handover request 50. In this case, the second radio node 2 accepts switching of the mobile user entity 4 from the first radio node 1 towards the second radio node 2 at the frame number 53 proposed by the first radio node 1.

Preferably, the handover request acknowledgment 60 of the second radio node 2 contains a frame number 63 different from the proposed frame number 53 contained in the handover request 50. This might in particular be the case, if the second radio node 2 can not accept serving the mobile user entity 4 beginning with the frame number 53 proposed by the first radio node 1, for example because the corresponding time moment for the switching of the radio link is too soon and the second radio node 2 has not yet enough resources to serve the mobile user entity 4 already at this moment. Therefore, the second radio node 2 proposes another frame number 63 corresponding to a later moment for the switching of the radio link.

Preferably, the first radio node 1 sends a handover confirmation, in particular by means of a handover confirmation message, (not shown in figure 2) to the radio node 2, if the first radio node 1 has determined to switch the radio link to the radio node 2, in particular based on the handover request acknowledgment 60 from the second radio node 2. In particular, after the first radio node 1 receives the handover request acknowledgment 60 from the second radio node 2 indicating that the second radio node 2 accepts the switching of the radio link towards the second radio node 2, the first radio node 1 sends a handover confirmation message to the radio node 2 to which the radio link is switched consecutively.

Preferably, after the first radio node 1 receives the handover request acknowledgment 60 from the second radio node 2 indicating that the second radio node 2 accepts the switching of the radio link towards the second radio node 2, the first radio node 1 sends a handover notification 70 to the mobile user entity 4 concerning the switching of the radio link (see figure 2). Preferably, the handover notification 70 comprises a UE identifier 71, a user specific control channel search space definition 72 and/or a frame number 73 to switch the radio link. Preferably, a UE identifier 71 and/or a user specific control channel search space definition 72 is contained in the handover notification 70, in case the UE identifier 71 and/or the user specific control channel search space definition 72 is different from the UE identifier 51 and/or the user specific control channel search space definition 52 respectively, which have been used for the mobile user entity 4 before switching of the radio link from the first radio node 1 towards the second radio node 2 and are therefore known to the mobile user entity 4. The UE identifier 71 and the user specific search space definition 72 preferably correspond to the UE identifier 61 and the user specific control channel search space definition 62 contained in the handover request acknowledgment 60, which are identical or different to the UE identifier 51 and/or the user specific control channel search space definition 52, respectively, used in the handover request message 50. Preferably, the handover notification message 70 comprises a frame number 71 to switch the radio link from the first radio node 1 towards the second radio node 2, wherein the frame number 71 preferably corresponds to the frame number 61 contained in the handover request acknowledgment 60, and is identical or different to the frame number 51 contained in the handover request message. Preferably, the handover notification 70 comprises indication of the radio node 2 towards which the radio link is switched, in particular a cell identifier, cell ID, 74.Preferably, the mobile user entity 4 has reported in the measurement report 42 that the signal strength of a particular radio cell, here second radio cell 20, is higher than the signal strength of the first radio cell 10 and the second radio cell 20 is the only radio cell different from the first radio cell 10 of which the signal strength has been reported to the first radio node 1. In case, the radio link is switched to the radio node 2 operating said particular radio cell of which the signal strength has been measured, here second radio cell 20, the mobile user entity 4 already knows to which radio node, namely radio node 2, the radio link is switched. Accordingly, the identification of the second radio node 2 does not have to be communicated to the mobile user entity 4, so that in this case the handover notification message 70 does preferably not contain the identification of the second radio node 2 to which the radio link is switched.

If, preferably, the mobile user entity 4 does not know, to which radio node, e.g. radio node 2 or 3 (see in detail below), the radio link is switched, the notification message 70 preferably contains the indication of the radio node to which the radio link is switched, e.g. radio node 2, if the radio link is switched to radio node 2, or radio node 3, if the radio link is switched to radio node 3. In particular, by the notification message 70 sent to the mobile user entity 4, the switching of the radio link from the first radio node 1 towards the second radio node 2 is transparent for the mobile user entity 4.

Preferrably, the notification message 70 is included within a Radio Resource Control (RCC) message or, as preferably only very few bytes have to be transmitted, within a Media Access Control (MAC) message.

Preferably, a notification message 70 is not sent to the mobile user entity 4. This means, the sending of the notification message 70 as such is optional. Preferably, the switching of the radio link between the mobile user entity 4 and a first radio node 1 towards a second radio node 2, is implemented without the mobile user entity 4 is notified about the switching of the radio link. Preferably, the mobile user entity 4 is not aware of the switching of the radio link, but is able to continue communication over the mobile communication network 100 after switching of the radio link from the first radio node 1 towards the second radio node 2. Preferably, the mobile user entity 4 does not have to know and/or does not know that the mobile user entity 4 is now (after switching) served by the second radio node 2 instead of the first radio node 1. In particular, the second radio node 2 resumes providing a radio link between the mobile user entity 4 and the second radio node 2 without any signalling (such as RACH messages) between the mobile user entity 4 and the second radio node 2 is necessary.

Preferably, the first radio node 1 after sending the handover request 50 to the second radio node 2 and, in particular after receiving a response (e.g. handover request acknowledgment 60 or rejection of the handover request message 50) from the second radio node 2, the first radio node 1 decides, if the radio link is actually switched to the second radio node 2. For example, the first radio node 1 after sending the handover request 50 to the second radio 2 receives a rejection of the handover request 50. In this case, instead of a handover request acknowledgment 60, the second radio node 2 sends a handover request rejection message to the first radio cell which replaces the handover request acknowledgment 60 in figure 2. Accordingly, the first radio node 1 determines that the radio link is not switched to the second radio node 2.Preferably, the first radio node 1 sends a respective notification message 70 to the mobile user entity 4 indicating that the radio link is not switched, in particular that the radio link is not switched towards the second radio node 2.Preferably, the first radio node 1 receives a handover request acknowledgment 60 from the second radio node 2 indicating that the second radio node 2 accepts the switching of the radio link to the second radio node 2. However, the first radio node 1 determines that the second radio node 2 suffers a higher load than the first radio node 1, wherein the feature load refers preferably to the inner processing load and/or to the amount of mobile user devices/entities served by the respective radio node 1, 2. Alternatively or in addition, the first radio node 1 determines that the back-haul quality of the second radio node 2 is worse than the back-haul quality of the first radio node 1. Therefore, the first radio node determines that the radio link is not switched to the second radio node 2.Preferably, the first radio node determines that the load of the second radio node 2 is lower than the load of the first radio node 1 and/or that the back-haul quality in regard of the second radio node 2 is better than the back-haul quality in regard of the first radio node 1 and comes to the conclusion by a over-all consideration of the signal strength of the second radio cell 20, the load of the second radio node 2 and/or of the back-haul quality of the second radio node 2 in comparison with the signal strength of the first radio cell 10, the load of the first radio node 1 and/or of the back-haul quality of the first radio node 1 that it is appropriate to switch the radio link between the mobile user entity 4 and the first radio node 1 towards the second radio node 2. Accordingly, the radio link between the mobile user entity 4 and the first radio node 1 is switched from the first radio node 1 towards the second radio node 2 and thereby the radio link between the mobile user entity 4 and the second radio node 2 is established. By switching the radio link from the first radio node 1 to the second radio node 2, the communication of the mobile user entity 4 is established with the second radio node 2, or in other words the communication of the mobile user entity 4 is established via the second radio node 2 over the mobile communication network 100 with further devices (e.g. computers, servers, mobile phones) being part of or being connected to the mobile communication network 100. The double arrow 90 in figure 2 symbolizes the communication between the mobile user entity 4 with or via the second radio node 2. After the radio link has been established between the second radio node 2 and the mobile user entity 4, the mobile user entity 4 is served by the second radio node 2, this means the mobile user entity 4 can communicate via the second radio node 2 over the mobile communication network 100 with other devices being part of or being connected to the mobile communication network 100.

Preferably, a method for providing a handover is implemented in regard of the mobile user entity 4, the first radio node 1, the second radio node 2 and the third radio node 3. In a first scenario (see fig. 1), the mobile user entity 4 is served by the first radio node 1. The method comprises in particular deciding, if the radio link between the mobile user entity 4 and the first radio node 1 is switched towards the second radio node 2 or towards the third radio node 3. In particular, the method comprises further to switch the radio link between the mobile user entity 4 and the first radio node 1 towards the second radio node 2 or towards the third radio node 3, so that the mobile user entity 4 is in a second scenario served by the second radio node 2 or by the third radio node 3, respectively, as will be described in detail in the following.

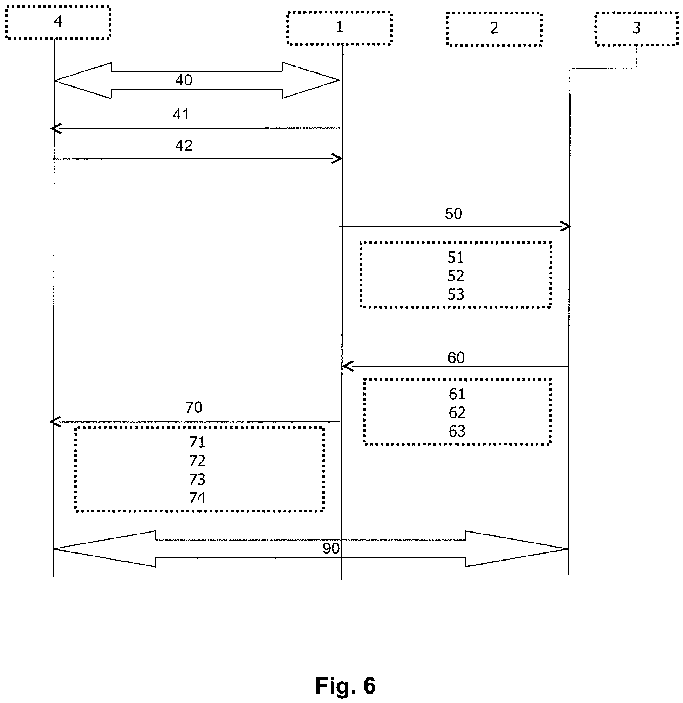

Figure 6 shows messages exchanged between the mobile user entity 4, the first radio node 1 and the second and/or third radio node 3. The double arrow 40 symbolizes the communication 40 between the mobile user entity 4 and the first radio node 1.

Preferably, the mobile user entity 4 is served by the first radio node 1 and receives a measurement configuration 41 from the first radio node 1. By means of the measurement configuration 41, which is preferably included in a measurement configuration message sent from the first radio node 1 and received by the mobile user entity 4, the mobile user entity 4 is configured to provide measurements about the first radio cell 10, about the second radio cell 20 and about the third radio cell 30. The mobile user entity 4 determines that the signal strength of the second radio cell 20 and/or the signal strength of the third radio cell 30 is higher than the signal strength of the first radio cell 10. Therefore, the mobile user entity 4 sends a measurement report 42 to the first radio node 1 including the measurement data about the first radio cell 10, the second radio cell 20 and the third radio cell 30.

Preferably, in case the signal strength of the second radio cell 20 is higher than the signal strength of the first radio cell 10, but the signal strength of the third radio cell 30 is lower than the signal strength of the first radio cell 10, the third radio cell 30 is not further considered and the method is further implemented as if there were no third radio node 3. Accordingly, preferably, in case the signal strength of the third radio cell 30 is higher than the signal strength of the first radio cell 10, but the signal strength of the second radio cell 20 is lower than the signal strength of the first radio cell 10, the second radio cell 20 is not further considered and the method is further implemented as if there were no second radio node 2.

Preferably, in case the signal strength of one or both of the second radio cell 20 and the third radio cell 30 is higher than the signal strength of the first radio cell 10, the measurement report 42 of the mobile user entity 4 contains the measurement data about the first radio cell 10, the second radio cell 20 and the third radio cell 30.

Accordingly, preferably, the first radio node 1 receives from the mobile user entity 4 a measurement report 42 about the first radio cell 10 and further about the second radio cell 20 and/or third radio cell 30, in particular comprising measurement data about a signal strength of the first radio cell 10 measured by the mobile user entity 4 and a signal strength of the second radio cell 20 and/or of the third radio cell 30 measured by the mobile user entity 4.

Preferably, based on the measurement report 42, the first radio node 1 decides that a switching of the radio link between the mobile user entity 4 and the first radio node 1 towards the second radio node 2 or towards the third radio node 3 is appropriate.

Preferably, the first radio node 1 sends a handover request 50 concerning the mobile user entity 4 to the second radio node 2 and preferably further to the third radio node 3, wherein the handover request 50 sent to the second radio node 2 and preferably to the third radio node 3 contains information sufficient for the second radio node 2 and the third radio node 3 to establish a radio link between the mobile user entity 4 and the second radio node 2 or the third radio node 3, respectively.

Preferably, if the handover request 50 is accepted by the second radio node 2 and/or by the third radio node 3, the first radio node 1 receives a handover request acknowledgment 60 from the second radio node 2 and/or from the third radio node 3, respectively.

Preferably, the information contained in the handover request 50 comprises one or more of: a UE identifier (UE ID) 51, a user specific control channel search space definition 52, a proposed frame number 53 to switch the radio link from the first radio node 1 towards the second radio node 2 or towards the third radio node 3.

Preferably, in regard of the user specific control channel search space definition, it is referred to the description provided above, in particular in context of figures 3, 4 and 5, which applies here correspondingly.

Preferably, the handover request acknowledgment 60 of the second radio node 2 and/or of the third radio node 3 contains a UE identifier 61 identical to the UE identifier 51 contained in the handover request 50.

Preferably, the handover request acknowledgment 60 of the second radio node 2 and/or of the third radio node 3 contains a UE identifier 61 different from the UE identifier 51 contained in the handover request 50. For example, the UE identifier 51 used for the mobile user entity 4 by the first radio node 1 is already reserved by the third radio node 3 for another mobile user entity different from the mobile user entity 4. Therefore, radio node 3 allocates a UE identifier 61 different from the UE identifier 51. The handover request acknowledgment 60 of the third radio node 3 comprises therefore a UE identifier 61 different from the UE identifier 51 contained in the handover request 50.

Preferably, the handover request acknowledgment 60 of the second radio node 2 and/or of the third radio node 3 contains a user specific control channel search space definition 62 identical to the user specific control channel search space definition 52 contained in the handover request 50 (see figure 4 which applies here correspondingly for radio node 2 and analogously for radio node 3).

A detailed description of the user specific control channel search space definition 51, in particular in the context of figures 3, 4 and 5 has been provided above, to which it is referred here.

Preferably, the handover request acknowledgment 60 of the second radio node 2 and/or of the third radio node 3 contains a user specific control channel search space definition 62 different from the user specific control channel search space definition 52 contained in the handover request 50. Preferably, this is based on an unequal distribution of mobile user entities within the control channels of the first radio node 1, of the second radio node 2 and/or of the third radio node 3 (see figure 5 which applies for here correspondingly for radio node 2 and analogously for radio node 3).

Preferably, (see figure 5), radio node 3 provides a user specific control channel search space definition 62 in the handover request acknowledgement 60 of the third radio node 3 different from the user specific control channel search space definition 52 contained in the handover request 50. For example, the user specific control channel search space definition 52 used for the mobile user entity 4 by the first radio node 1 is allocated in frequency space 81a, which is reserved, by the third radio node 3, for a user specific control channel search space definition of another mobile user entity different from the mobile user device 4. Therefore, the third radio node 3 allocates the user specific control channel search space definition 62 in frequency space 81b.

Preferably, the handover request acknowledgment 60 of the second radio node 2 and/or the third radio node 3 contains a frame number 63 identical to the proposed frame number 53 contained in the handover request 50.

Preferably, the handover request acknowledgment 60 of the second radio node 2 and/or the third radio node 3 contains a frame number 63 different from the proposed frame number 53 contained in the handover request 50. For example, radio node 3 is not able to serve the mobile user entity 4 at the frame number 53 proposed by the first radio node 1. This might be based on delay due to a non-ideal backhaul or internal processing load of the third radio node 3. Therefore, radio node 3 proposes for the switching of the radio link a frame number 63 different from the frame number 53 proposed by the first radio node 1, in particular corresponding to a later moment for the switching of the radio link. Accordingly, the handover request acknowledgment message 60 from the third radio node contains a frame number 63 different from the frame number 53 proposed by the first radio node 1.

Preferably, the first radio node 1 determines, in particular based on more or more of: a rejection of the handover request 50 by the second radio node 2 and/or by the third radio node 3, load balancing considerations, a back-haul quality in regard of the second radio node 2 and of the third radio node 3, if the radio link between the mobile user entity 4 and the first radio node 1 is switched to the second radio node 2 or to the third radio node 3.Preferably, in case the first radio node 1 decides to switch the radio link, the first radio node determines, whether the radio link is switched towards the second radio node 2 or towards the third radio node 3.

Preferably, according to said determination of the first radio node 1, the radio link between the mobile user entity 4 and the second radio node 2 or between the mobile user entity 4 and the third radio node 3 is established by switching the radio link between the mobile user entity 4 and the first radio node 1 from the first radio node 1 towards the second radio node 2 or towards the third radio node 3, respectively.

Preferably, the first radio node 1 sends a handover confirmation message to the radio node 2 or 3, to which the first radio node 1 has determined to switch the radio link. Preferably, the first radio node 1 sends a handover confirmation message to the radio node 2, if the first radio node 1 has determined to switch the radio link to the radio node 2.Preferably, the first radio node 1 sends a handover confirmation message to the radio node 3, if the first radio node 1 has determined to switch the radio link to the radio node 3.

Preferably, the first radio node 1 sends a handover notification 70 to the mobile user entity 4 concerning the switching of the radio link, wherein the handover notification 70 comprises one or more of: a UE identifier 71, a user specific control channel search space definition 72, a frame number 73 to switch the radio link and/or an indication of the radio node 2 or 3 towards which the radio link is switched. In particular, the handover notification 70 comprises a UE identifier 71, if the UE identifier 71 for the mobile user device 4 is different from the UE identifier 51 used by the mobile user entity 4 before the switching of the radio link. Further, in particular, the handover notification 70 comprises a user specific control channel search space definition 72, if the user specific control channel search space definition 72 is different from the user specific control channel search space definition 52 used by the mobile user entity 4 before the switching of the radio link. In particular, the handover notification 70 comprises a frame number 73 for the switching of the radio link, in particular because the mobile user entity 4 has no knowledge about the frame number 73 at which the radio link is switched. In particular, the handover notification 70 comprises an indication of the radio node (2 or 3) towards which the radio link is switched, in particular a cell identifier, cell ID, 74 of the respective radio cell (20 or 30) which is operated by the radio node (2 or 3, respectively) to which the radio link is switched. In particular, the notification comprises an indication of the radio node (2 or 3) to which the radio link is switched, in case the radio node (2 or 3) does not operate the strongest radio cell (20 or 30, respectively) according to the measurement report 42 of the mobile user entity 4. For example, mobile user entity 4 reported that radio cell 20 operated by radio node 2 has a signal strength higher than radio cell 30 and higher then radio cell 10. However, for example due to load balancing considerations, the first radio node 1 determined to switch the radio link to radio node 3 (and not to radio node 2). Preferably, in this case the notification message 70 sent to mobile user entity 4 comprises the indication of radio node 3 to which the radio link is switched.

Preferably, the first radio node 1 determines to switch the radio link towards the second radio node 2. As soon the radio link is switched towards the second radio 2, the second radio node 2 serves the mobile user entity 4. In this case, the communication 90 (see figure 6) is established between the mobile user entity 4 and the second radio node 2 or in other words between the mobile user entity 4 via the second radio node 2 over the mobile communication network 100 to further mobile user entities/devices being part of or connected to the mobile communication network 100.

Preferably, the first radio node 1 determines to switch the radio link towards the third radio node 3. As soon the radio link is switched towards the third radio 3, the third radio node 3 serves the mobile user entity 4. In this case, the communication 90 (see figure 6) is established between the mobile user entity 4 and the third radio node 3 or in other words between the mobile user entity 4 via the third radio node 3 over the mobile communication network 100 to further mobile user entities/devices being part of or connected to the mobile communication network 100.

Preferably, one or more of the steps implemented by the first radio node 1 and/or functions of the first radio node 1 are implemented by a centralized control station 5 (see fig. 1) instead of or in addition to the first radio node 1. The centralized control station 5 implements these steps or functions in particular by means of a communication and control connection (wirelessly or by wire), which is established between the centralized control station 5 and the first radio node 1 and, preferably, also with the second radio node 2 and/or third radio node 3. In particular, the centralized control station 5 might send a measurement configuration 40 to the mobile user entity 3. The centralized control station might receive a measurement report 42 from the user entity 4. The centralized control station 5 might send a handover request 50 to the second radio node 2 and/or to the third radio node 3 and might receive a handover request acknowledgment 60 from the second radio node 2 and/or from the third radio node 3. The centralized control station might decide, if the radio link between the mobile user entity 4 and the first radio node 1 it switched towards the second radio node 2 or the third radio node 3. The centralized control station 5 might send a handover notification 70 to the mobile user entity 4.

Further, Illustratively, a first radio node 1 is provided for operating a first radio cell 10 of a mobile communication network 100, the first radio node 1 comprising a control unit 11 (see fig. 1). The first radio node 1 is, in particular by means of the control unit 11, adapted to send a handover request 50 concerning a mobile user entity, UE, 4 served by the first radio node 1 to a second radio node 2 operating a second radio cell 20 and optionally further to a third radio node 3 operating a third radio cell 30, wherein the handover request 50 sent to the second radio node 2 and optionally to the third radio node 3 contains information sufficient for the second radio node 2 and potentially for the third radio node 3, respectively, to establish a radio link between the mobile user entity 4 and the second radio node 2 or potentially the third radio node 3, respectively.

Further, illustratively, a second radio node 2 is provided for operating a second radio cell 20 of a mobile communication network 100, the second radio node 2 comprising a control unit 21 (see fig. 1). The second radio node 2 is, in particular by means of the control unit 21, adapted to receive from a first radio node 1 operating a first radio cell 10 a handover request 50 concerning a mobile user entity, UE, 4 served by the first radio node 1, wherein the handover request 50 received by the second radio node 2 contains information sufficient for the second radio node 2 to establish a radio link between the mobile user entity 4 and the second radio node 2.

Further, preferably, a third radio node 3 is provided for operating a third radio cell 30 of a mobile communication network 100, the third radio node 3 comprising a control unit 31 (see fig. 1). The third radio node 3 is, in particular by means of the control unit 31, adapted to receive from a first radio node 1 operating a first radio cell 10 a handover request 50 concerning a mobile user entity, UE, 4 served by the first radio node 1, wherein the handover request 50 received by the third radio node 3 contains information sufficient for the third radio node 3 to establish a radio link between the mobile user entity 4 and the third radio node 3.

Further, a software product, is provided adapted to execute the method according to claims 1 - 11, when executed on a computer, which might be in particular implemented by one or more of the control units 11, 12, 13 of the radio nodes 1, 2, 3, respectively.

Preferably, the computer and/or one or more of the control units 11, 12, 13 may be implemented as a single unit, a stand-alone device, or within a database, integrated in a computer and/or within a computer network, in particular might be integrated within or implemented in connection with the centralized control station 5. One or more of the control units 11, 12, 13 may be implemented through the use of hardware, software and/or hardware capable of executing software in association with appropriate software.

More specifically, one or more of the control units 11, 12, 13 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of one or more of the control units 11, 12, 13 may be implemented as processing blocks in a software program. Such software may be employed in a digital signal processor, micro-controller, or general-purpose computer implemented as a single device or integrated in a computer network.

One or more of the control units 11, 12, 13 may comprise program code embodied in tangible media, such as magnetic recording media, optical recording media, solid state memory, floppy diskettes, CD-ROMs, hard drives, or any other machine-readable storage medium, wherein, when the program code is loaded into and executed in one or more of the control units 11, 12, 13, one or more of the control units 11, 12, 13 becomes an apparatus used for practicing the invention.

The invention provides the advantage that a handover can be implemented without any transmission delay, thus resulting in a fast handover procedure, in particular faster than in current implementation where the RACH signaling has to be provided to achieve a handover. Further, the invention achieves a reduction of a handover failure risk, due to the omitted RACH channel. While in the prior art the search spaces of different mobile user entities are distributed over a plurality of frequency spaces of a control channel, the invention according to the above described method implements a user specific control channel search space definition, where the user specific control channel search space of a particular mobile user entity is allocated to a particular frequency space of the control channel and where the user specific control channel search spaces of other mobile user entities are allocated to respective other frequency spaces of the control channel. In particular, the invention implements an intra frequency handover scheme for 5G which does not require a RACH access at the target radio cell by introducing new 5G specific messages, which comprise in particular a user specific control channel search space definition. Intra frequency handover scheme means in particular, that the frequency bandwidth of the control channel, this means of all frequency spaces of the control channel, which is used before, during and after handover, remains the same, while, preferably, the user specific control channel search space of a particular mobile user entity is re-allocated during the handover (and used after handover) to a frequency space different from the frequency space used for the user specific control channel search space of said particular mobile user entity before handover. In particular, this invention implemented with the new 5G radio interface enables a switching of the radio link between a mobile user entity and a first radio node towards a second radio node within one timeslot. In particular, the invention achieves a UE functionality to switch the downlink and uplink within one timeslot. Further, the invention is independent from the particular architecture, namely centralized or de-centralized, of the 5G network in which the method according to the invention is processed.

## Claims

1. A method for providing a handover in a mobile communication network (100), the method comprising:
- sending, by a first radio node (1) of the mobile communication network (100), the first radio node (1) operating a first radio cell (10), a handover request (50) concerning a mobile user entity, UE, (4), which is served by the first radio node (1), to a second radio node (2) of the mobile communication network (100), the second radio node (2) operating a second radio cell (20), **characterized in that** the handover request (50) contains a user specific control channel search space definition (52) or an indirect reference to a user specific control channel search space definition (52), wherein the user specific control channel search space definition (52, 62, 72) indicates a frequency space (81a) within a transmission time interval, TTI, (80) containing a user specific control channel search space (82a), wherein the user specific control channel search space (82a) comprises the UE identifier (51, 61) and a reference (83) to data blocks (84) containing up-link and/or down-link control information for the mobile user entity (4) identified by the UE identifier (51, 61), wherein the user specific control channel search space definition (52, 62, 72) is information which is sufficient for the second radio node (2) to establish a radio link between the mobile user entity (4) and the second radio node (2) without the need to implement a RACH procedure.

2. The method according to claim 1, the method further comprising:
- if the handover request (50) is accepted by the second radio node (2) receiving, by the first radio node (1), a handover request acknowledgment (60) from the second radio node (2).

3. The method according to claim 1, wherein the handover request (50) further contains one or more of: a UE identifier, UE ID, (51) and a proposed frame number (53) to switch the radio link from the first radio node (1) towards the second radio node (2).

4. The method according to claim 2, wherein the handover request acknowledgment (60) of the second radio node (2) contains a user specific control channel search space definition (62) different from the user specific control channel search space definition (52) contained in the handover request (50) or the handover request acknowledgment (60) of the second radio node (2) contains an indirect reference to a user specific control channel search space definition (62) different from the indirect reference to a user specific control channel search space definition (52) contained in the handover request (50).

5. The method according to claim 2, wherein the handover request acknowledgment (60) of the second radio node (2) contains one or more of: a UE identifier (61) different from a UE identifier (51) contained in the handover request (50) and a frame number (63) different from a proposed frame number (53) contained in the handover request (50).

6. The method according to claim 2, further comprising:
- determining, in particular based on more or more of: a rejection of the handover request (50) by the second radio node (2), load balancing considerations, a back-haul quality in regard of the second radio node (2), to switch the radio link between the mobile user entity (4) and the first radio node (1) towards the second radio node (2); and
- establishing, according to said determining, by means of the user specific control channel search space definition (52, 62) the radio link between the mobile user entity (4) and the second radio node (2) by switching the radio link between the mobile user entity (4) and the first radio node (1) from the first radio node (1) towards the second radio node (2).

7. The method according to claim 1, further comprising:
- receiving from the mobile user entity (4) a measurement report (42) about the first radio cell (10) and further about the second radio cell (20), in particular comprising measurement data about a signal strength of the first radio cell (10) measured by the mobile user entity (4) and a signal strength of the second radio cell (20) measured by the mobile user entity (4);
- deciding, based on the measurement report (42) that a switching of the radio link between the mobile user entity (4) and the first radio node (1) towards the second radio node (2) is appropriate.

8. The method according to claim 1, the method further comprising:
- sending, by the first radio node (1) the handover request (50) to a third radio node (3) of the mobile communication network (100), the third radio node (3) operating a third radio cell (30).

9. The method according to claim 8, the method further comprising:
- if the handover request (50) is accepted by the third radio node (3), receiving a handover request acknowledgment (60) from the third radio node (3).

10. The method according to claim 9, wherein the handover request acknowledgment (60) of the third radio node (3) contains a user specific control channel search space definition (62) different from the user specific control channel search space definition (52) contained in the handover request (50) or an indirect reference to a user specific control channel search space definition (62) different from the indirect reference to a user specific control channel search space definition (52) contained in the handover request (50).

11. A first radio node (1) for operating a first radio cell (10) of a mobile communication network (100), the first radio node (1) comprising a control unit (11) adapted to send a handover request (50) concerning a mobile user entity, UE, (4) served by the first radio node (1) to a second radio node (2) operating a second radio cell (20) of the mobile communication network (100), **characterized in that** the handover request (50) contains a user specific control channel search space definition (52) or an indirect reference to a user specific control channel search space definition (52), wherein the user specific control channel search space definition (52, 62, 72) indicates a frequency space (81a) within a transmission time interval, TTI, (80) containing a user specific control channel search space (82a), wherein the user specific control channel search space (82a) comprises the UE identifier (51, 61) and a reference (83) to data blocks (84) containing up-link and/or down-link control information for the mobile user entity (4) identified by the UE identifier (51, 61), wherein the user specific control channel search space definition (52, 62, 72) is information which is sufficient for the second radio node (2) to establish a radio link between the mobile user entity (4) and the second radio node (2) without the need to implement a RACH procedure.

12. A second radio node (2) for operating a second radio cell (20) of a mobile communication network (100), the second radio node (2) comprising a control unit (21) adapted to receive from a first radio node (1) operating a first radio cell (10) of the mobile communication network (100) a handover request (50) concerning a mobile user entity, UE, (4) served by the first radio node (1), **characterized in that** the handover request (50) contains a user specific control channel search space definition (52) or an indirect reference to a user specific control channel search space definition (52), wherein the user specific control channel search space definition (52, 62, 72) indicates a frequency space (81a) within a transmission time interval, TTI, (80) containing a user specific control channel search space (82a), wherein the user specific control channel search space (82a) comprises the UE identifier (51, 61) and a reference (83) to data blocks (84) containing up-link and/or down-link control information for the mobile user entity (4) identified by the UE identifier (51, 61), wherein the user specific control channel search space definition (52, 62, 72) is information which is sufficient for the second radio node (2) to establish a radio link between the mobile user entity (4) and the second radio node (2) without the need to implement a RACH procedure.

13. A software product, adapted to execute the method according to claims 1
- 10, when executed on a computer.

## Patentansprüche

1. Verfahren zum Bereitstellen eines Handovers in einem mobilen Kommunikationsnetzwerk (100), wobei das Verfahren umfasst:
- Senden, durch einen ersten Funkknoten (1) des mobilen Kommunikationsnetzwerks (100), wobei der erste Funkknoten (1) eine erste Funkzelle (10) betreibt, einer Handover-Anforderung (50), betreffend eine mobile Benutzerentität, UE, (4), die bedient wird von dem ersten Funkknoten (1), an einen zweiten Funkknoten (2) des mobilen Kommunikationsnetzwerks (100), wobei der zweite Funkknoten (2) eine zweite Funkzelle (20) betreibt, **dadurch gekennzeichnet, dass** die Handover-Anforderung (50) eine benutzerspezifische Steuerkanal-Suchraumdefinition (52) oder eine indirekte Referenz auf eine benutzerspezifische Steuerkanal-Suchraumdefinition (52) umfasst, wobei die benutzerspezifische Steuerkanal-Suchraumdefinition (52, 62, 72) einen Frequenzraum (81a) anzeigt innerhalb eines TTI (Transmission Time Interval) (80), das einen benutzerspezifischen Steuerkanal-Suchraum (82a) umfasst, wobei der benutzerspezifische Steuerkanal-Suchraum (82a) die UE-Kennung (51, 61) und eine Referenz (83) auf Datenblöcke (84) umfasst, die Uplink- und/oder Downlink-Steuerinformation für die mobile Benutzerentität (4) umfassen, identifiziert durch die UE-Kennung (51,61), wobei die benutzerspezifische Steuerkanal-Suchraumdefinition (52, 62, 72) Information ist, die hinreichend ist für den zweiten Funkknoten (2) für den Aufbau einer Funkverbindung zwischen der mobilen Benutzerentität (4) und dem zweiten Funkknoten (2), ohne die Notwendigkeit einer Implementierung eines RACH-Verfahrens.

2. Verfahren nach Anspruch 1, wobei das Verfahren weiterhin umfasst:
- wenn die Handover-Anforderung (50) von dem zweiten Funkknoten (2) akzeptiert wird, Empfangen, durch den ersten Funkknoten (1), einer Handover-Anforderungsbestätigung (60) von dem zweiten Funkknoten (2).

3. Verfahren nach Anspruch 1, wobei die Handover-Anforderung (50) weiterhin umfasst eine oder mehre aus: UE-Kennung, UE ID, (51) und eine vorgeschlagene Rahmennummer (53) zum Umschalten der Funkverbindung von dem ersten Funkknoten (1) auf den zweiten Funkknoten (2).

4. Verfahren nach Anspruch 2, wobei die Handover-Anforderungsbestätigung (60) des zweiten Funkknotens (2) umfasst eine spezifische Steuerkanal-Suchraumdefinition (62), die sich unterscheidet von der benutzerspezifischen Steuerkanal-Suchraumdefinition (52), die enthalten ist in der Handover-Anforderung (50), oder die Handover-Anforderungsbestätigung (60) des zweiten Funkknotens (2) umfasst eine indirekte Referenz auf eine benutzerspezifische Steuerkanal-Suchraumdefinition (62), die sich unterscheidet von der indirekten Referenz auf eine benutzerspezifische Steuerkanal-Suchraumdefinition (52), die in der Handover-Anforderung (50) enthalten ist.

5. Verfahren nach Anspruch 2, wobei die Handover-Anforderungsbestätigung (60) des zweiten Funkknotens (2) umfasst eine oder mehrere aus: eine UE-Kennung (61), die sich von einer UE-Kennung (51) unterscheidet, die in der Handover-Anforderung (50) enthalten ist, und eine Rahmennummer (63), die sich von der vorgeschlagenen Rahmennummer (53) unterscheidet, die in der Handover-Anforderung (50) enthalten ist.

6. Verfahren nach Anspruch 2, weiterhin umfassend:
- Bestimmen, insbesondere auf Grundlage einer oder mehrerer aus: einer Ablehnung der Handover-Anforderung (50) durch den zweiten Funkknoten (2), Betrachtungen des Lastausgleichs, eine Backhaul-Qualität hinsichtlich des zweiten Funkknotens (2), zum Umschalten der Funkverbindung zwischen der mobilen Benutzerentität (4) und dem ersten Funkknoten (1) auf den zweiten Funkknoten (2); und
- Aufbau, gemäß besagtem Bestimmen, mittels der benutzerspezifischen Steuerkanal-Suchraumdefinition (52,62), der Funkverbindung zwischen der mobilen Benutzerentität (4) und dem zweiten Funkknoten (2) durch Umschalten der Funkverbindung zwischen der mobilen Benutzerentität (4) und dem ersten Funkknoten (1) von dem ersten Funkknoten (1) auf den zweiten Funkknoten (2).

7. Verfahren nach Anspruch 1, weiterhin umfassend:
- Empfangen von der mobilen Benutzerentität (4) eines Messberichts (42) über die erste Funkzelle (10) und weiterhin über die zweite Funkzelle (20), insbesondere umfassend Messdaten über eine Signalstärke der ersten Funkzelle (10), die gemessen wird von der mobilen Benutzerentität (4), und eine Signalstärke der zweiten Funkzelle (20), die gemessen wurde von der mobilen Benutzerentität (4);
- Entscheiden, auf Grundlage des Messberichts (42), dass ein Umschalten der Funkverbindung zwischen der mobilen Benutzerentität (4) und dem ersten Funkknoten (1) auf den zweiten Funkknoten (2) geeignet ist.

8. Verfahren nach Anspruch 1, wobei das Verfahren weiterhin umfasst:
- Senden, durch den ersten Funkknoten (1), der Handover-Anforderung (50) an einen dritten Funkknoten (3) des mobilen Kommunikationsnetzwerks (100), wobei der dritte Funkknoten (3) eine dritte Funkzelle (30) betreibt.

9. Verfahren nach Anspruch 8, wobei das Verfahren weiterhin umfasst:
- wenn die Handover-Anforderung (50) akzeptiert wird von dem dritten Funkknoten (3), Empfangen einer Handover-Anforderungsbestätigung (60) von dem dritten Funkknoten (3).

10. Verfahren nach Anspruch 9, wobei die Handover-Anforderungsbestätigung (60) des dritten Funkknotens (3) umfasst eine benutzerspezifische Steuerkanal-Suchraumdefinition (62), die sich unterscheidet von der benutzerspezifischen Steuerkanal-Suchraumdefinition (52), die in der Handover-Anforderung (50) enthalten ist, oder eine indirekte Referenz auf eine benutzerspezifische Steuerkanal-Suchraumdefinition (62), die sich unterscheidet von der indirekten Referenz auf eine benutzerspezifische Steuerkanal-Suchraumdefinition (52), die in der Handover-Anforderung (50) enthalten ist.

11. Erster Funkknoten (1) zum Betreiben einer ersten Funkzelle (10) eines mobilen Kommunikationsnetzwerks (100), wobei der erste Funkknoten (1) eine Steuereinheit (11) umfasst, die ausgelegt ist zum Senden einer Handover-Anforderung (50), betreffend eine mobile Benutzerentität, UE, (4), die von dem ersten Funkknoten (1) bedient wird, an einen zweiten Funkknoten (2), der eine zweite Funkzelle (20) des mobilen Kommunikationsnetzwerks (100) betreibt, **dadurch gekennzeichnet, dass** die Handover-Forderung (50) eine benutzerspezifische Steuerkanal-Suchraumdefinition (52) oder eine indirekte Referenz auf eine benutzerspezifische Steuerkanal-Suchraumdefinition (52) umfasst, wobei die benutzerspezifische Steuerkanal-Suchraumdefinition (52, 62, 72) einen Frequenzraum (81a) anzeigt innerhalb eines TTI (Transmission Time Interval) (80), das einen benutzerspezifischen Steuerkanal-Suchraum (82a) umfasst, wobei der benutzerspezifische Steuerkanal-Suchraum (82a) die UE-Kennung (51, 61) und eine Referenz (83) auf Datenblöcke (84) umfasst, die Uplink- und/oder Downlink-Steuerinformation für die mobile Benutzerentität (4) umfassen, identifiziert durch die UE-Kennung (51, 61), wobei die benutzerspezifische Steuerkanal-Suchraumdefinition (52, 62, 72) Information ist, die hinreichend ist für den zweiten Funkknoten (2) für den Aufbau einer Funkverbindung zwischen der mobilen Benutzerentität (4) und dem zweiten Funkknoten (2), ohne die Notwendigkeit einer Implementierung eines RACH-Verfahrens.

12. Zweiter Funkknoten (2) zum Betreiben einer zweiten Funkzelle (20) eines mobilen Kommunikationsnetzwerks (100), wobei der zweite Funkknoten (2) eine Steuereinheit (21) umfasst, die ausgelegt ist zum Empfangen von einem ersten Funkknoten (1), der eine erste Funkzelle (10) des mobilen Kommunikationsnetzwerks (100) betreibt, einer Handover-Anforderung (50), betreffend eine mobile Benutzerentität, UE, (4), die bedient wird von dem ersten Funkknoten (1), **dadurch gekennzeichnet, dass** die Handover-Anforderung (50) enthält eine benutzerspezifische Steuerkanal-Suchraumdefinition (52) oder eine indirekte Referenz auf eine benutzerspezifische Steuerkanal-Suchraumdefinition (52) umfasst, wobei die benutzerspezifische Steuerkanal-Suchraumdefinition (52, 62, 72) einen Frequenzraum (81a) anzeigt innerhalb eines TTI (Transmission Time Interval) (80), das einen benutzerspezifischen Steuerkanal-Suchraum (82a) umfasst, wobei der benutzerspezifische Steuerkanal-Suchraum (82a) die UE-Kennung (51, 61) und eine Referenz (83) auf Datenblöcke (84) umfasst, die Uplink- und/oder Downlink-Steuerinformation für die mobile Benutzerentität (4) umfassen, identifiziert durch die UE-Kennung (51, 61), wobei die benutzerspezifische Steuerkanal-Suchraumdefinition (52, 62, 72) Information ist, die hinreichend ist für den zweiten Funkknoten (2) für den Aufbau einer Funkverbindung zwischen der mobilen Benutzerentität (4) und dem zweiten Funkknoten (2), ohne die Notwendigkeit einer Implementierung eines RACH-Verfahrens.

13. Software-Produkt, ausgelegt zum Ausführen des Verfahrens nach den Ansprüchen 1-10, wenn es auf einem Computer ausgeführt wird.

## Revendications

1. Procédé pour réaliser un transfert dans un réseau de communication mobile (100), le procédé comprenant :
- l'envoi, par un premier noeud radio (1) du réseau de communication mobile (100), le premier noeud radio (1) exploitant une première cellule radio (10), d'une demande de transfert (50) concernant une entité utilisateur, UE, mobile (4), qui est desservie par le premier noeud radio (1), à un deuxième noeud radio (2) du réseau de communication mobile (100), le deuxième noeud radio (2) exploitant une deuxième cellule radio (20), **caractérisé en ce que** la demande de transfert (50) contient une définition d'espace de recherche de canal de commande spécifique à l'utilisateur (52) ou une référence indirecte à une définition d'espace de recherche de canal de commande spécifique à l'utilisateur (52), la définition d'espace de recherche de canal de commande spécifique à l'utilisateur (52, 62, 72) indiquant un intervalle de fréquence (81a) dans un intervalle de temps de transmission, TTI, (80) contenant un espace de recherche de canal de commande spécifique à l'utilisateur (82a), l'espace de recherche de canal de commande spécifique à l'utilisateur (82a) comprenant l'identifiant d'UE (51, 61) et une référence (83) à des blocs de données (84) contenant des informations de commande de liaison montante et/ou de liaison descendante pour l'entité utilisateur mobile (4) identifiée par l'identifiant d'UE (51, 61), la définition d'espace de recherche de canal de commande spécifique à l'utilisateur (52, 62, 72) étant des informations qui suffisent au deuxième noeud radio (2) pour établir une liaison radio entre l'entité utilisateur mobile (4) et le deuxième noeud radio (2) sans devoir mettre en oeuvre une procédure RACH.

2. Procédé selon la revendication 1, comprenant en outre l'étape suivante :
- si la demande de transfert (50) est acceptée par le deuxième noeud radio (2) recevoir, au moyen du premier noeud radio (1), une confirmation de demande de transfert (60) à partir du deuxième noeud radio (2).

3. Procédé selon la revendication 1, dans lequel la demande de transfert (50) contient en outre un ou plusieurs des éléments suivants : un identifiant d'UE, UE ID, (51) et un nombre de trames (53) proposé pour faire passer la liaison radio du premier noeud radio (1) au deuxième noeud radio (2).

4. Procédé selon la revendication 2, dans lequel la confirmation de demande de transfert (60) du deuxième noeud radio (2) contient une définition d'espace de recherche de canal de commande spécifique à l'utilisateur (62) différente de la définition d'espace de recherche de canal de commande spécifique à l'utilisateur (52) contenue dans la demande de transfert (50), ou la confirmation de demande de transfert (60) du deuxième noeud radio (2) contient une référence indirecte à une définition d'espace de recherche de canal de commande spécifique à l'utilisateur (62) différente de la référence indirecte à une définition d'espace de recherche de canal de commande spécifique à l'utilisateur (52) contenue dans la demande de transfert (50).

5. Procédé selon la revendication 2, dans lequel la confirmation de demande de transfert (60) du deuxième noeud radio (2) contient un ou plusieurs des éléments suivants : un identifiant d'UE (61) différent d'un identifiant d'UE (51) contenu dans la demande de transfert (50) et un nombre de trames (63) différent d'un nombre de trames (53) proposé contenu dans la demande de transfert (50).

6. Procédé selon la revendication 2, comprenant en outre les étapes suivantes :
- déterminer, en particulier en fonction d'un ou de plusieurs des éléments suivants : un rejet de la demande de transfert (50) par le deuxième noeud radio (2), des considérations d'équilibrage de charge, une qualité de liaison terrestre en ce qui concerne le deuxième noeud radio (2), pour faire passer la liaison radio entre l'entité utilisateur mobile (4) et le noeud radio (1) vers le deuxième noeud radio (2) ; et
- établir, conformément à ladite détermination, au moyen de la définition d'espace de recherche de canal de commande spécifique à l'utilisateur (52, 62), la liaison radio entre l'entité utilisateur mobile (4) et le deuxième noeud radio (2) en faisant passer la liaison radio entre l'entité utilisateur mobile (4) et le premier noeud radio (1) du premier noeud radio (1) au deuxième noeud radio (2).

7. Procédé selon la revendication 1, comprenant en outre les étapes suivantes :
- recevoir à partir de l'entité utilisateur mobile (4) un rapport de mesure (42) concernant la première cellule radio (10) et concernant en outre la deuxième cellule radio (20), comprenant en particulier des données de mesure concernant une intensité de signal de la première cellule radio (10) mesurée par l'entité utilisateur mobile (4) et une intensité de signal de la deuxième cellule radio (20) mesurée par l'entité utilisateur mobile (4) ;
- décider, en fonction du rapport de mesure (42), qu'un passage de la liaison radio entre l'entité utilisateur mobile (4) et le premier noeud radio (1) vers le deuxième noeud radio (2) est approprié.

8. Procédé selon la revendication 1, comprenant en outre l'étape suivante :
- envoyer, au moyen du premier noeud radio (1), la demande de transfert (50) à un troisième noeud radio (3) du réseau de communication mobile (100), le troisième noeud radio (3) exploitant une troisième cellule radio (30).

9. Procédé selon la revendication 8, comprenant en outre l'étape suivante :
- si la demande de transfert (50) est acceptée par le troisième noeud radio (3), recevoir une confirmation de demande de transfert (60) à partir du troisième noeud radio (3).

10. Procédé selon la revendication 9, dans lequel la confirmation de demande de transfert (60) du troisième noeud radio (3) contient une définition d'espace de recherche de canal de commande spécifique à l'utilisateur (62) différente de la définition d'espace de recherche de canal de commande spécifique à l'utilisateur (52) contenue dans la demande de transfert (50), ou une référence indirecte à une définition d'espace de recherche de canal de commande spécifique à l'utilisateur (62) différente de la référence indirecte à une définition d'espace de recherche de canal de commande spécifique à l'utilisateur (52) contenue dans la demande de transfert (50).

11. Premier noeud radio (1) exploitant une première cellule radio (10) d'un réseau de communication mobile (100), le premier noeud radio (1) comprenant une unité de commande (11) adaptée pour envoyer une demande de transfert (50) concernant une entité utilisateur mobile, UE, (4) desservie par le premier noeud radio (1) à un deuxième noeud radio (2) exploitant une deuxième cellule radio (20) du réseau de communication mobile (100), **caractérisé en ce que** la demande de transfert (50) contient une définition d'espace de recherche de canal de commande spécifique à l'utilisateur (52) ou une référence indirecte à une définition d'espace de recherche de canal de commande spécifique à l'utilisateur (52), la définition d'espace de recherche de canal de commande spécifique à l'utilisateur (52, 62, 72) indiquant un intervalle de fréquence (81a) dans un intervalle de temps de transmission, TTI, (80) contenant un espace de recherche de canal de commande spécifique à l'utilisateur (82a), l'espace de recherche de canal de commande spécifique à l'utilisateur (82a) comprenant l'identifiant d'UE (51, 61) et une référence (83) à des blocs de données (84) contenant des informations de commande de liaison montante et/ou de liaison descendante pour l'entité utilisateur mobile (4) identifiée par l'identifiant d'UE (51, 61), la définition d'espace de recherche de canal de commande spécifique à l'utilisateur (52, 62, 72) étant des informations qui suffisent au deuxième noeud radio (2) pour établir une liaison radio entre l'entité utilisateur mobile (4) et le deuxième noeud radio (2) sans devoir mettre en oeuvre une procédure RACH.

12. Deuxième noeud radio (2) exploitant une deuxième cellule radio (20) d'un réseau de communication mobile (100), le deuxième noeud radio (2) comprenant une unité de commande (21) adaptée pour recevoir à partir d'un premier noeud radio (1) exploitant une première cellule radio (10) du réseau de communication mobile (100) une demande de transfert (50) concernant une entité utilisateur mobile, UE, (4) desservie par le premier noeud radio (1), **caractérisé en ce que** la demande de transfert (50) contient une définition d'espace de recherche de canal de commande spécifique à l'utilisateur (52) ou une référence indirecte à une définition d'espace de recherche de canal de commande spécifique à l'utilisateur (52), la définition d'espace de recherche de canal de commande spécifique à l'utilisateur (52, 62, 72) indiquant un intervalle de fréquence (81a) dans un intervalle de temps de transmission, TTI, (80) contenant un espace de recherche de canal de commande spécifique à l'utilisateur (82a), l'espace de recherche de canal de commande spécifique à l'utilisateur (82a) comprenant l'identifiant d'UE (51, 61) et une référence (83) à des blocs de données (84) contenant des informations de commande de liaison montante et/ou de liaison descendante pour l'entité utilisateur mobile (4) identifiée par l'identifiant d'UE (51, 61), la définition d'espace de recherche de canal de commande spécifique à l'utilisateur (52, 62, 72) étant des informations qui suffisent au deuxième noeud radio (2) pour établir une liaison radio entre l'entité utilisateur mobile (4) et le deuxième noeud radio (2) sans devoir mettre en oeuvre une procédure RACH.

13. Produit logiciel, adapté pour exécuter le procédé selon les revendications 1 à 10, lorsqu'il est exécuté sur un ordinateur.
